# EUROPÄISCHE PATENTSCHRIFT

(11) **EP 3 608 481 B1**
(45) Veröffentlichungstag und Bekanntmachung des Hinweises auf die Patenterteilung: **14.10.2020**
(21) Anmeldenummer: 18187751.5
(22) Anmeldetag: 07.08.2018
(51) Int. Cl.: E04B 1/68, E06B 1/62

(54) **DICHTBANDROLLE AUS EINEM DICHTBAND MIT INNENLIEGENDEN SPERRSCHICHTEN**
SEALING STRIP ROLL MADE FROM A SEALING STRIP WITH INTERNAL BARRIER LAYERS
ROULEAU DE BANDE D'ÉTANCHÉITÉ D'UNE BANDE D'ÉTANCHÉITÉ DOTÉE DE COUCHES BARRIÈRES INTERNES

(43) Veröffentlichungstag der Anmeldung: 12.02.2020
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 2 990 551
- EP-A1- 3 346 068
- DE-U1-202007 017 267

## Beschreibung

Die vorliegende Erfindung betrifft eine Dichtbandrolle aus einem Dichtband aus weichem, komprimierbarem Schaumstoff mit einer Mehrzahl innenliegender Sperrschichten.

Dichtbänder werden zum Abdichten von Fugen zwischen einem Rahmenprofil, z.B. eines Fensters oder einer Tür, und einer Gebäudewand verwendet, um die Fugen gegen Luftzug und Schlagregen abzudichten. Üblicherweise sind solche Dichtbänder zur platzsparenden Lagerung, zum Transport und zur besseren Handhabung während der Montage komprimiert zu Dichtbandrollen aufgewickelt. Neben der Luftdurchlässigkeit und der Schlagregendichtheit kommt dem Wasserdampfdiffusionswiderstand des Dichtbands als eine der wesentlichen Dichtbandeigenschaften besondere Bedeutung zu. Allgemein wird die Wasserdampfdiffusion in Funktionsrichtung des Dichtbands, also zwischen einer Rauminnenseite und einer Raumaußenseite der abzudichtenden Fuge berücksichtigt, um ein Diffusionsgefälle zwischen der Rauminnenseite und der Raumaußenseite einzustellen. Zur Beeinflussung der Wasserdampfdiffusion durch das Dichtband wurde auf zumindest einer der Seitenflanken des Dichtbands oder parallel zu diesen innerhalb des Dichtbands zumindest eine Sperrschicht vorgesehen, die sich im Einbauzustand des Dichtbands über den gesamten Fugenquerschnitt zwischen Rahmenprofil und Gebäudewand erstreckt. Eine solche Sperrschicht weist gegenüber dem Schaumstoff des Dichtbands einen erhöhten Wasserdampfdiffusionswiderstand auf und ist dadurch geeignet, die Wasserdampfdiffusion durch das Dichtband zu reduzieren bzw. ein Diffusionsgefälle zwischen der Rauminnenseite und der Raumaußenseite einzurichten.

Es hat sich herausgestellt, dass die Wasserdampfdurchlässigkeit eines Dichtbands über größere Längenabschnitte des Dichtbands hinweg zu betrachten ist. Lokale Unterschiede des Wasserdampfdiffusionswiderstands des Dichtbands, wie sie z.B. schon aufgrund fertigungstechnischer Begebenheiten auftreten können, führen zu einer Wasserdampfdiffusion innerhalb des Dichtbands hin zu Bereichen geringeren Wasserdampfdiffusionswiderstands. Eine solche Diffusion in Längsrichtung des Dichtbands führt dazu, dass die Wasserdampfdiffusion durch das Dichtband gegenüber einem vollständig homogen ausgebildeten Dichtband ungewollt hoch ist und von den vorbestimmten Sollwerten abweichen kann. Ähnliches gilt für die Luftdurchlässigkeit.

Das Dokument EP 3 346 068 A1 offenbart eine Dichtbandrolle mit den Merkmalen des Oberbegriffs des Anspruchs 1.

Es ist daher die Aufgabe der vorliegenden Erfindung, ein zu einer Dichtbandrolle aufgewickeltes Dichtband mit zuverlässig einstellbarem Wasserdampfdiffusionswiderstand bereitzustellen.

Diese Aufgabe wird durch eine Dichtbandrolle nach Anspruch 1 gelöst. Bevorzugte Ausführungsformen sind Gegenstand der abhängigen Unteransprüche.

Eine erfindungsgemäße Dichtbandrolle besteht aus einem Dichtband aus weichem, komprimierbarem Schaumstoff mit einer Mehrzahl innenliegender Sperrschichten. Das Dichtband weist eine Oberseite, eine Unterseite und zwei die Oberseite und die Unterseite verbindende Seitenflanken sowie eine Längsrichtung auf, die parallel zur Unterseite und zu den Seitenflanken ausgerichtet ist. Das Dichtband ist um eine Achse, die sich quer zur Längsrichtung des Dichtbands erstreckt, zur Dichtbandrolle derart aufgewickelt, dass die Oberseite einer Windung an der Unterseite einer angrenzenden Windung der Dichtbandrolle anliegt und die Seitenflanken des Dichtbands Stirnflächen der Dichtbandrolle bilden. Eine Breite der Dichtbandrolle als der Abstand einer Stirnfläche von der gegenüberliegenden Stirnfläche der Dichtbandrolle definiert. Das Dichtband weist ferner eine Mehrzahl von Dichtbandabschnitten auf, die in einem abgewickelten Zustand des Dichtbands in Längsrichtung hintereinander angeordnet sind, wobei zwischen jeweils zwei aneinander angrenzenden Dichtbandabschnitten der Mehrzahl von Dichtbandabschnitten eine Sperrschicht der Mehrzahl von Sperrschichten angeordnet ist. Die Mehrzahl von Sperrschichten erstreckt sich über mindestens 50% der Breite der Dichtbandrolle zwischen den einander gegenüberliegenden Stirnflächen der Dichtbandrolle.

Auf diese Weise wird ein auf eine Dichtbandrolle aufgewickeltes Dichtband bereitgestellt, das Sperrschichten aufweist, die sich im Wesentlichen über einen Großteil, vorzugsweise über den gesamten Querschnitt des Dichtbands quer zu dessen Längsrichtung erstrecken. Dadurch bilden die Sperrschichten in Längsrichtung des Dichtbands hintereinander angeordnete Dichtbandabschnitte, von denen jeweils zwei aneinander angrenzende Dichtbandabschnitte durch eine zwischenliegende Sperrschicht getrennt sind. Die in Längsrichtung des Dichtbands hintereinander angeordneten Sperrschichten beeinflussen somit eine Wasserdampfdiffusion und/oder Luftdurchlässigkeit innerhalb des Dichtbands in Längsrichtung desselben. Inhomogenitäten des Schaumstoffmaterials des Dichtbands wirken sich somit allenfalls lokal aus. Eine Wasserdampfdiffusion innerhalb des Dichtbands in Längsrichtung des Dichtbands kann zumindest weitgehend unterbunden werden.

Um diesen Effekt zu erzielen, erstreckt sich die Mehrzahl von Sperrschichten über mindestens 50%, mehr bevorzugt über mindestens 75%, noch mehr bevorzugt über mindestens 90% der Breite der Dichtbandrolle zwischen den einander gegenüberliegenden Stirnflächen der Dichtbandrolle. Je größer der Bereich ist, über den sich die Mehrzahl von Sperrschichten zwischen den Stirnflächen der Dichtbandrolle und somit zwischen den Seitenflanken des Dichtbands erstreckt, desto vollständiger werden die in Längsrichtung hintereinander angeordneten Dichtbandabschnitte voneinander getrennt. Eine Wasserdampfdiffusion innerhalb des Dichtbands in Längsrichtung kann dadurch zunehmend verringert werden. Insbesondere wird verhindert, dass eine Wasserdampfdiffusion um die Mehrzahl von Sperrschichten herum erfolgt. Die Mehrzahl von Sperrschichten kann sich ausgehend von einer Stirnfläche der Dichtbandrolle in Richtung der gegenüberliegenden Stirnfläche erstrecken. Die Mehrzahl von Sperrschichten kann sich aber auch derart zwischen den Stirnflächen der Dichtbandrolle erstrecken, dass seitliche, den Stirnflächen zugewandte Ränder der Sperrschichten beabstandet zu den Stirnflächen angeordnet sind. In einer besonders bevorzugten Ausführungsform verläuft die Mehrzahl von Sperrschichten durchgehend von einer Stirnfläche der Dichtbandrolle zur gegenüberliegenden Stirnfläche der Dichtbandrolle.

Dichtbandrollen weisen ferner die Vorteile einer platzsparenden Lagerung, einer guten Transportierbarkeit und Handhabung der Dichtbänder auf. Das Dichtband ist dabei bevorzugt komprimiert zur Dichtbandrolle aufgewickelt. Die komprimierte Dicke der erfindungsgemäßen Dichtbandrollen beträgt weniger als 25% der Schaumstoffausgangshöhe. In bevorzugten Ausführungsformen weist das Dichtband eine komprimierte Dicke von weniger als 20%, noch mehr bevorzugt weniger als 15% und/oder höher als 5% der Schaumstoffausgangshöhe auf.

Das Dichtband weist vorzugsweise in einem expandierten Zustand einen im Wesentlichen rechteckigen Querschnitt auf, wobei eine Breite des Dichtbands zwischen den Seitenflanken des Dichtbands definiert ist, eine Höhe des Dichtbands zwischen der Oberseite und der Unterseite des Dichtbands definiert ist und eine Länge des Dichtbands in Richtung der Längsrichtung definiert ist. Die Ober- und die Unterseite bilden im Querschnitt senkrecht zur Längsrichtung Breitseiten des Dichtbands und die Seitenflanken bilden in diesem Querschnitt Schmalseiten des Dichtbands. Das Dichtband erstreckt sich wesentlich weiter in seiner Länge als in seiner Breite und seiner Höhe. Da die Seitenflanken des Dichtbands die Stirnflächen der Dichtbandrolle bilden, entspricht eine Breite der Dichtbandrolle im Wesentlichen der Breite des Dichtbands. Geringe Abweichungen können sich dadurch gegeben, dass sich die Seitenflanken im zur Dichtbandrolle aufgewickelten komprimierten Zustand geringfügig nach außen wölben. Solche Abweichungen sollen bei der Angabe des Bereichs (in [%]), über den sich die Mehrzahl von Sperrschichten über die Breite des Dichtbands und der Dichtbandrolle erstreckt, nicht berücksichtigt werden. Erstreckt sich die Mehrzahl von Sperrschichten über die gesamte Breite der Dichtbandrolle, erstreckt sie sich auch über die gesamte Breite des Dichtbands und umgekehrt.

Ein Einbauzustand des Dichtbands ist als der Zustand definiert, in dem das Dichtband in einer Fuge zwischen einem Rahmenelement, z.B. einem Fenster- oder Türrahmen, und einer Gebäudemauer angeordnet ist. Dabei erstreckt sich die Längsrichtung des Dichtbands entlang der umlaufenden Fuge und das Dichtband liegt flächig mit der Unterseite und der Oberseite an dem Rahmenelement und an der Gebäudemauer an. Eine Seitenflanke des Dichtbands ist dann der Rauminnenseite und die gegenüberliegende Seitenflanke der Raumaußenseite zugewandt. Eine Funktionsrichtung des Dichtbands ist definiert als die Richtung, in der das Dichtband die Rauminnenseite gegenüber der Raumaußenseite im Bereich der Fuge dämmt und abdichtet. Die Funktionsrichtung erstreckt sich somit senkrecht zu den Seitenflanken des Dichtbands und parallel zur Unterseite des Dichtbands von der Rauminnenseite zur Raumaußenseite. Die Funktionsrichtung ist somit senkrecht zur Längsrichtung des Dichtbands ausgerichtet.

Die Mehrzahl innenliegender Sperrschichten erstreckt sich erfindungsgemäß quer zur Längsrichtung des Dichtbands und somit parallel zur Funktionsrichtung des Dichtbands. Genauer schneidet eine Gerade, die parallel zur Längsrichtung des Dichtbands ausgerichtet ist, eine Ebene, die parallel zur Sperrschicht ausgerichtet ist. Vorzugsweise schneidet die Gerade die Ebene unter einem Winkel von 90°.

In einer möglichen Ausführungsform weist das Dichtband der erfindungsgemäßen Dichtbandrolle auch solche Sperrschichten auf, die vorzugsweise zumindest eine Seitenflanke des Dichtbands bedecken und/oder parallel zu den Seitenflanken im Inneren des Dichtbands angeordnet sind und in Längsrichtung des Dichtbands verlaufen. Solche innenliegenden und in Längsrichtung verlaufenden Sperrschichten teilen das Dichtband in eine Mehrzahl von quer zur Längsrichtung nebeneinander angeordnete Dichtbandstreifen.

In einer vorteilhaften Ausführungsform weist das Dichtband eine Drainageschicht zum Erfassen und zielgerichteten Ableiten von Wasser aus dem Dichtband auf. Wasser, das beispielsweise durch Schlagregen unerwünscht in das Dichtband gelangt, kann dadurch wieder aus dem Dichtband abgeleitet werden. Ein feuchtes Dichtband bzw. ein feuchter Bereich des Dichtbands würde nachteilig zu einer Erhöhung der Wärmeleitfähigkeit und entsprechend zu einer niedrigeren Wärmedämmung durch das Dichtband führen. Die Drainageschicht kann einen Schaumstoffstreifen umfassen oder durch eine Sperrschicht, bevorzugt eine parallel zu den Seitenflanken des Dichtbands verlaufende Sperrschicht, gebildet werden.

Eine Sperrschicht kann beispielsweise mehrlagig ausgebildet sein, wobei eine Lage eine Drainageschicht bildet, die dazu geeignet ist, eindringendes Wasser abzuleiten. Die Drainageschicht kann z. B. eine Membran- und/oder Vliesschicht aufweisen. Die Drainageschicht kann aber auch aus einem Schaumstoff gebildet sein. Beispielsweise umfasst das Dichtband dann zumindest drei nebeneinander angeordnete Dichtbandstreifen, von denen zumindest einer, vorzugsweise ein innerer Dichtbandstreifen, als Drainageschicht ausgebildet ist. Die Drainageschicht weist dann einen zumindest überwiegend offenzelligen Schaumstoff auf, der Wasser aufnehmen und der Schwerkraft folgend durch die offenen Poren ableiten kann. Durch die Verwendung eines Schaumstoffs werden zugleich die dämmenden Eigenschaften des Dichtbands kaum negativ beeinflusst. Zusätzlich kann die Drainageschicht auch hier eine Vliesschicht aufweisen.

Um die Bereiche des Dichtbands, in denen sich Inhomogenitäten des Dichtbands nachteilig auf dessen Wasserdampfdiffusionswiderstand auswirken, zu verkleinern, ist in einer bevorzugten Ausführungsform zumindest eine Sperrschicht vorgesehen, die von einer Stirnfläche der Dichtbandrolle in Richtung der gegenüberliegenden Stirnfläche der Dichtbandrolle sowie in Längsrichtung des Dichtbands verläuft. Diese weitere Sperrschicht erstreckt sich parallel zur Unterseite des Dichtbands. Die weitere Sperrschicht kann zusätzlich oder alternativ zu der in Längsrichtung parallel zu den Seitenflanken des Dichtbands verlaufenden Sperrschicht vorgesehen sein.

Vorzugsweise erstreckt sich die zumindest eine weitere Sperrschicht im Wesentlichen senkrecht zu den Seitenflanken des Dichtbands und parallel zur Unterseite des Dichtbands. Die zumindest eine weitere Sperrschicht ist innerhalb des Dichtbands angeordnet und unterteilt das Dichtband in Richtung seiner Höhe in übereinanderliegende Dichtbandlagen. Es ist weiterhin bevorzugt, dass die zumindest eine weitere Sperrschicht im abgewickelten Zustand des Dichtbands senkrecht zur parallel zu den Seitenflanken verlaufenden Sperrschicht sowie senkrecht zu jeder der erfindungsgemäßen Mehrzahl von Sperrschichten angeordnet ist. Ist bevorzugt auch die zumindest eine in Längsrichtung verlaufende Sperrschicht senkrecht zu jeder der erfindungsgemäßen Mehrzahl von Sperrschichten angeordnet, wird das Dichtband auf diese Weise in im Wesentlichen quaderförmige oder würfelförmige Abschnitte unterteilt.

Vorzugsweise ist die Mehrzahl von Sperrschichten senkrecht zur Unterseite und zu den Seitenflanken angeordnet, sodass sie sich axial bezüglich der Dichtbandrolle erstreckt. Weist das Dichtband einen rechteckigen Querschnitt auf, ist die Mehrzahl von Sperrschichten auch senkrecht zur Oberseite ausgerichtet. Ein zur Dichtbandrolle aufzuwickelndes Dichtband, bei dem die Sperrschichten senkrecht zu den Seitenflanken angeordnet sind, lässt sich besonders einfach herstellen. Erstrecken sich die Sperrschichten axial bezüglich der Dichtbandrolle, ist sichergestellt, dass die Sperrschichten nach der Montage des Dichtbands, bei der die Unterseite des Dichtbands an einem Rahmenelement oder an der Gebäudemauer befestigt wird, wie gewünscht von der Rauminnenseite zur Raumaußenseite ausgerichtet sind.

In einer alternativen Ausführungsform ist die Mehrzahl von Sperrschichten in einem abgewickelten Zustand des Dichtbands schräg zur Oberseite und zur Unterseite sowie senkrecht zu den Seitenflanken angeordnet. In einer weiteren alternativen Ausführungsform ist die Mehrzahl von Sperrschichten in einem abgewickelten Zustand des Dichtbands senkrecht zur Unterseite, aber schräg zu den Seitenflanken angeordnet. In wiederum einer alternativen Ausführungsform ist die Mehrzahl von Sperrschichten in einem abgewickelten Zustand des Dichtbands schräg zur Oberseite, zur Unterseite und zu den Seitenflanken angeordnet. In all diesen Ausführungsformen erstreckt sich die Mehrzahl von Sperrschichten jedoch von einer Seitenflanke des Dichtbands zur gegenüberliegenden Seitenflanke des Dichtbands bzw. von einer Stirnfläche der Dichtbandrolle zur gegenüberliegenden Stirnfläche der Dichtbandrolle. Auf diese Weise wird ermöglicht, dass die einzelnen zwischen den Sperrschichten gebildeten Dichtbandabschnitte verschiedene Ausprägungen erhalten und die Diffusionseigenschaften des Dichtbands weiter variiert werden können.

Bevorzugt erstreckt sich die Mehrzahl von Sperrschichten nur teilweise zwischen der Oberseite und der Unterseite des Dichtbands. Zwischen der Oberseite bzw. Unterseite des Dichtbands und den Sperrschichten verbleibt dann ein Schaumstoffsteg. Um die Abdichtung aneinander angrenzender Dichtbandabschnitte zu gewährleisten, erstreckt sich die Mehrzahl von Sperrschichten jedoch bevorzugt über einen Großteil der Höhe des Dichtbands und der Schaumstoffsteg ist dünn ausgebildet. Vorzugsweise weist ein Schaumstoffsteg dabei eine Höhe von maximal 10 mm, mehr bevorzugt von maximal 5 mm und noch mehr bevorzugt von maximal 2 mm auf. Auf diese Weise wird eine einfache Herstellung des Dichtbands ermöglicht, bei der zugleich eine ungewollte Verletzung von Sperrschichtmaterial vermieden wird. Zudem wird der Zusammenhalt des Dichtbands in Längsrichtung unabhängig von einer optionalen Verhaftung der einzelnen Dichtbandabschnitte mittels der Mehrzahl von Sperrschichten gewährleistet.

In einer alternativen Ausführungsform erstreckt sich die Mehrzahl von Sperrschichten durchgehend von der Oberseite zur Unterseite des Dichtbands. Dies bietet den Vorteil, dass die einzelnen durch die Sperrschichten getrennten Dichtbandabschnitte vollständig durch eine zwischenliegende Sperrschicht getrennt sind und eine Diffusion um die Sperrschichten in Längsrichtung des Dichtbands überhaupt nicht möglich ist. Es sind auch Ausführungsformen möglich, bei denen einige Sperrschichten sich durchgehend von der Oberseite zur Unterseite des Dichtbands erstrecken und sich die übrigen Sperrschichten nur teilweise zwischen der Oberseite und der Unterseite des Dichtbands erstrecken.

Vorzugsweise weist zumindest eine Sperrschicht zwei Sperrschichtabschnitte auf, wobei jeweils ein Sperrschichtabschnitt an einem der an die Sperrschicht angrenzenden Dichtbandabschnitte flächig anliegt. Die zwei Sperrschichtabschnitte können miteinander verhaftet sein. Die zwei Sperrschichtabschnitte können auch miteinander verschmolzen sein oder auf ähnliche Art und Weise aneinander gefügt werden. Es versteht sich, dass die zwei Sperrschichtabschnitte insbesondere durch das Verschmelzen zumindest abschnittsweise eine Einheit bilden können und die einzelnen Sperrschichtabschnitte in einem solchen Abschnitt dann gegebenenfalls nicht mehr voneinander zu unterscheiden sind.

Zusätzlich oder alternativ zum Verhaften oder Verschmelzen der zwei Sperrschichtabschnitte miteinander können die zwei Sperrschichtabschnitte jeweils einen Schenkel der zumindest einen Sperrschicht bilden und die zwei Schenkel können durch einen Verbindungsabschnitt der zumindest einen Sperrschicht miteinander verbunden sein. Der Verbindungsabschnitt ist vorzugsweise integral mit den zwei Sperrschichtabschnitten ausgebildet und entsteht durch Umformen einer Sperrschicht. Insbesondere entsteht der Verbindungsabschnitt, wenn eine flächige Sperrschicht entlang einer Linie gefaltet oder geknickt wird, sodass sie zwei Schenkel, die jeweils einen Sperrschichtabschnitt bilden, und einen diese Schenkel verbindenden Verbindungsabschnitt aufweist.

Der Verbindungsabschnitt der zumindest einen Sperrschicht, die zwei Sperrschichtabschnitte aufweist, ist dann vorzugsweise U- oder V-förmig ausgebildet und im Bereich der Oberseite oder der Unterseite des Dichtbands angeordnet. Die U- bzw. V-Form ergibt sich dabei durch Falten bzw. Knicken der Sperrschicht. Auch wenn ein Verbindungsabschnitt vorgesehen ist, können die Schenkel bzw. Sperrschichtabschnitte der zumindest einen Sperrschicht miteinander verhaftet sein. Der Scheitel eines U- oder V-förmigen Verbindungsabschnitts einer Sperrschicht erstreckt sich entlang einer Geraden, die parallel zur Funktionsrichtung des Dichtbands, also quer zur Längsrichtung des Dichtbands ausgerichtet ist.

Dass der Verbindungsabschnitt im Bereich der Oberseite oder der Unterseite des Dichtbands angeordnet ist, bedeutet, dass er sehr nahe an der Oberseite bzw. der Unterseite angeordnet ist. So kann z.B. ein Scheitel des Verbindungsabschnitts, also ein äußerster Randbereich des Verbindungsabschnitts, mit der Oberseite oder der Unterseite zusammenfallen oder außerhalb des Dichtbands liegen. Die an eine solche Sperrschicht angrenzenden Schaumstoffstreifen des Dichtbands sind dann vollständig voneinander getrennt. Insbesondere aus herstellungstechnischen Gründen ist es jedoch bevorzugt, dass zwischen dem Verbindungsabschnitt bzw. einem Scheitel desselben und der Ober- bzw. Unterseite des Dichtbands, in dessen Nähe der Verbindungsabschnitt angeordnet ist, ein schmaler Schaumstoffsteg verbleibt, wie er oben beschrieben ist.

Um eine möglichst einfache Herstellung der Dichtbandrolle zu ermöglichen, weisen mindestens zwei Sperrschichten der Mehrzahl von Sperrschichten jeweils zwei Sperrschichtabschnitte und einen Verbindungsabschnitt auf und die in Längsrichtung des Dichtbands aufeinanderfolgenden Verbindungsabschnitte der mindestens zwei Sperrschichten sind abwechselnd im Bereich der Oberseite und der Unterseite des Dichtbands angeordnet. Auf diese Weise ist das zur Dichtbandrolle aufzuwickelnde Dichtband durch gegensinniges Umklappen einzelner Dichtbandabschnitte besonders einfach herstellbar, wie insbesondere aus der nachfolgenden Beschreibung unter Bezugnahme auf die Figuren hervorgeht.

In einer besonders effektiv herstellbaren Ausführungsform ist zwischen den mindestens zwei Sperrschichten, die zwei Sperrschichtabschnitte und einen Verbindungsabschnitt aufweisen, mindestens eine Sperrschicht angeordnet, die nur einen Sperrschichtabschnitt aufweist, der sich vorzugsweise durchgehend von der Oberseite zur Unterseite des Dichtbands erstreckt.

Es ist bevorzugt, dass die Sperrschichten in einem abgewickelten Zustand des Dichtbands parallel zueinander angeordnet sind. Weiterhin sind die Sperrschichten vorzugsweise in Längsrichtung des Dichtbands im selben Abstand zueinander angeordnet. Dadurch wird gewährleistet, dass alle Dichtbandabschnitte dieselben Eigenschaften aufweisen und ein hinsichtlich der Dicht- und Dämmeigenschaften möglichst homogenes Dichtband gebildet wird. Die Sperrschichten können aber auch schräg zu einander angeordnet sein, in unterschiedlichen Abständen zueinander angeordnet sein und/oder unterschiedliche Materialeigenschaften aufweisen.

Besonders bevorzugt sind die hierin beschriebenen Sperrschichten aus einem folienartigen Material oder einem Klebstoff, insbesondere aus einem Folienstreifen, einem Klebebandstreifen oder einem klebstoffartigen flüssigen Medium gebildet. Solche Sperrschichtmaterialien lassen sich besonders einfach und gut kontrollierbar auf den Schaumstoff des Dichtbands aufbringen und mit diesem verbinden. Zudem eignen sich diese Materialien besonders gut als Sperrschichtmaterial, da sich ihre Dichteigenschaften gezielt einstellen lassen.

Beispielsweise sind die hierin beschriebenen Sperrschichten aus einem folienartigen Material, z.B. einer Folie aus Polyamid, Polyurethan, Polypropylen, oder Copolymeren davon gebildet. Die hierin beschriebenen Sperrschichten können auch aus einem Klebstoff, z.B. einem Dispersionsklebstoff, insbesondere einem Acrylatklebstoff gebildet sein. Die Sperrschichten können alle aus demselben Material oder aus unterschiedlichen Materialien gebildet sein.

Die Sperrschichten können auch feuchtevariabel ausgebildet sein, d.h. ihr Wasserdampfdiffusionswiderstand ändert sich in Abhängigkeit von der Luftfeuchtigkeit der Umgebung der Sperrschicht. Kennzeichnend für den Wasserdampfdiffusionswiderstand ist der Wasserdampfdiffusionswert bezogen auf eine Luftschichtdicke in Metern, der sogenannte sD-Wert.

Vorzugsweise weist eine Sperrschicht einen sD-Wert von 0,05 m bis 100 m, mehr bevorzugt von 0,1 m bis 25 m oder von 0,2 m bis 15 m auf (bei 25% relativer Luftfeuchtigkeit (rel. LF)). Die Prüfung des sD-Wertes erfolgt nach DIN EN ISO 12572. Unabhängig hiervon oder in Kombination hiermit kann eine Sperrschicht einen sD-Wert von 0,02 m bis 10 m oder 0,03 m bis 6 m oder 0,05 m bis 2 m bei 72,5% rel. LF aufweisen, gemäß DIN EN ISO 12572. Beispielsweise kann der sD-Wert bei 25% rel. LF im Bereich von 1 bis 10 m und bei 72,5% rel. LF im Bereich von 0,1 bis 5 m liegen. Sofern nach DIN EN ISO 12572 nichts anderes bestimmt, beziehen sich die sD-Werte auf eine Temperatur von 20°C.

Der sD-Wert einer Sperrschicht bei 25% einerseits und bei 72,5% relativer Luftfeuchtigkeit andererseits (jeweils bei 20°C) unterscheidet sich vorzugsweise um einen Faktor von ≥ 1,1-1,2, vorzugsweise ≥ 1,5-2, gegebenenfalls bis zu einem Faktor von 3 bis 5 oder bis 10 bis 20 oder auch bis 50 oder bis 100 oder 150 oder darüber hinaus, wodurch die Abhängigkeit der Wasserdampfdiffusion der Sperrschicht von der Luftfeuchtigkeit definiert wird. Die Differenz beider sD-Werte der Sperrschicht bei den beiden angegebenen relativen Luftfeuchtigkeiten kann ≥ 0,25 m oder ≥ 0,5 m oder vorzugsweise ≥ 0,75-1 m betragen, beispielsweise bis zu 5-10 m oder bis zu 20-25 m oder darüber hinaus. Hierdurch ergibt sich bei verschiedenen Umgebungsbedingungen, beispielsweise im Sommer oder Winter oder in unterschiedlichen Klimazonen, eine ausreichende Abhängigkeit des Wasserdampfdiffusionswiderstandes, um auch bei unterschiedlicher relativer Luftfeuchtigkeit der Umgebung eine ausreichende Anpassung des Wasserdampfdiffusionswiderstandes an die Umgebungsbedingungen zu erzielen. Der sD-Wert bei 25% rel. Luftfeuchtigkeit ist hierbei vorzugsweise jeweils der höhere Wert gegenüber dem bei 72,5% Luftfeuchtigkeit.

Vorzugsweise bestehen die Sperrschichten mindestens teilweise aus einem synthetischen, wasserquellbaren Polymer.

Eine Sperrschicht weist eine Dicke von 1 µm bis 1 mm auf, vorzugsweise eine Dicke von 1 bis 500 µm oder 2 bis 250 µm, besonders bevorzugt im Bereich von 5 bis 100 µm oder 5 bis 50 µm.

Die Sperrschichten können auch mehrlagig, insbesondere als eine mehrlagige Verbundschicht ausgebildet sein. Ein- oder beidseitig der Funktionsschicht kann jeweils mindestens eine Lage mindestens eines weiteren Materials angeordnet sein. Die eine oder beiden weiteren Lagen, welche die Funktionsschicht jeweils teilweise oder vollständig bedecken, können diese schützen und tragen bzw. unterstützen und die Stabilität der Sperrschichten erhöhen. Die einzelnen Lagen können jeweils aus gleichem oder verschiedenem Material bestehen.

Die ein- oder beidseitig angeordneten Lagen können insbesondere Vliese, Gewebe oder Gitter aus inerten Stoffen wie Polyethylen, Polyurethan, Polypropylen, Polyester, Glasfasern oder Viskose sein, gegebenenfalls auch perforierte Folien, insbesondere solche aus Polyethylen, Polyurethan, Polypropylen oder Polyester. Die Schichten können allgemein aus jedem geeigneten Material bestehen, welches in Schichtform vorliegt und vorzugsweise keine höheren sD-Werte hat als die Funktionsschicht. Die ein- oder beidseitig angeordneten Lagen können aus einem Dispersionsklebstoff bestehen, insbesondere einem Acrylatkleber.

Die Dicke der die Funktionsschicht umgebenden Schichten der Sperrschichten können insgesamt je Seite unabhängig voneinander eine Dicke von 10-2.000 µm, vorzugsweise 10-500 µm, insbesondere 10-250 µm, besonders bevorzugt 10-90 µm betragen.

Die Sperrschichten bilden allgemein im Rahmen der Erfindung vorzugsweise eine durchgehend, nicht poröse und nicht-perforierte Schicht, besonders bevorzugt ist diese mindestens im Wesentlichen luftundurchlässig. Die Luftdurchlässigkeit der Sperrschichten bzw. Sperrlagen liegt vorzugsweise im Bereich von 0,01-50 l/(m²s), mehr bevorzugt im Bereich von 0,01-20 l/(m²s). Bevorzugt beträgt die Luftdurchlässigkeit ≤ 3-6 l/(m²s) oder vorzugsweise ≤ 1-2 l/(m²s) oder ≤ 0,2-0,5 l/(m²s) oder besonders bevorzugt ≤ 0,1-0,3 l/(m²s) nach DIN EN ISO 9237; Prüffläche 100 cm² bei einem Messdruck (Unterdruck) von 1,0 mbar, Prüfgerät Frank 21443, oder ist nicht mehr messbar.

Entscheidend für die Luftdurchlässigkeit eines Dichtbandabschnitts ist generell die gesamte Reduktion eines Luftstroms in einer Richtung über den gesamten Querschnitt des Dichtbandabschnitts. Sind beispielsweise in Funktionsrichtung des Dichtbands eine Mehrzahl von Sperrschichten und Dichtbandstreifen abwechselnd hintereinander angeordnet, ist die Reduktion des Luftstroms durch all diese Sperrschichten und Dichtbandstreifen zu berücksichtigen. Die Luftdurchlässigkeit des gesamten Dichtbands in Funktionsrichtung ist vorzugsweise kleiner als 50 l/(m²s), mehr bevorzugt kleiner als 30 l/(m²s), unter den oben angegebenen Messbedingungen.

In einer Ausführungsform umfasst das Dichtband bzw. die Dichtbandrolle weiterhin ein Zusatzmaterial, das auf eine Fläche des Dichtbands oder auf die Mehrzahl von Sperrschichten aufgebracht ist oder im Imprägnat enthalten ist. Das Zusatzmaterial kann dem Dichtband spezielle Eigenschaften verleihen. Als Zusatzmaterial kommen insbesondere Materialien zum Brandschutz (z.B. Blähgraffit, nicht brennbare Festkörper, CO₂-Emitter etc.), Materialien zur Isolierung (z.B. PU-Schaum, Harze, Dichtstoffe, etc.), Materialien zur Abdichtung gegen Feuchte (z.B. hydrophobe oder hydrophile Substanzen, bei Kontakt mit Wasser aufquellende Substanzen, etc.), Materialien zur Schallisolierung, Materialien zur kontrollierten Belüftung (z.B. Katalysatoren, etc.), Materialien für die Hygiene (z.B. Desinfektionsmittel, etc.) und/oder Materialien zur Auslösung der Expansion des Dichtbands (z.B. Treibmittel, Wärmequellen, etc.) in Frage. Dem Fachmann sind hier sowohl bezüglich der Anordnung sowie der Art und Eigenschaften des Zusatzmaterials Alternativen ersichtlich, die zum Erfüllen der jeweiligen Anforderungen einsetzbar sind.

Der Schaumstoff des Dichtbands kann aus jedem beliebigen offenzelligen oder geschlossenzelligen Weichschaumstoff gebildet sein, zum Beispiel aus Polyurethan, Polyethylen, Polyvinylchlorid oder Polypropylen, und kann für eine verzögerte Rückstellung nach Kompression imprägniert sein. Das Raumgewicht derartiger Weichschaumstoffe liegt zwischen 20 und 200 kg/m³.

Werden nebeneinanderliegende Dichtbandstreifen gebildet, bestehen diese vorzugsweise aus demselben Material. Alternativ können die Dichtbandstreifen aus unterschiedlichen Materialien gebildet sein. Ebenso sind die Dichtbandabschnitte vorzugsweise aus demselben Material gebildet, können aber auch aus unterschiedlichen Materialien gebildet sein.

Vorzugsweise weist der Weichschaum eine Stauchhärte von mehr als 2 kPa auf. Bevorzugt liegt die Stauchhärte bei mehr als 2,1 kPa, mehr bevorzugt bei mehr als 2,2 kPa, besonders bevorzugt bei mehr als 2,3 kPa. Die Stauchhärte beträgt vorzugsweise weniger als 4 kPa, bevorzugt weniger als 3,8 kPa und mehr bevorzugt weniger als 3,6 kPa. Die Stauchhärte ist ein Maß für die Festigkeit des Schaumstoffes. Die hier angegebenen Werte sind dabei auf eine Kompression von 40% gegenüber der Ausgangshöhe bezogen Die Stauchhärte wird bestimmt nach DIN EN ISO 3386, es wird der CV40 angegeben.

Die Dichtbänder werden vorzugsweise zur verzögerten Rückstellung wenigstens teilweise und bevorzugt vollständig mit einem Imprägniermittel imprägniert. Das Imprägniermittel weist vorzugsweise eine Acrylatdispersion auf. Bei einer vorteilhaften Ausführungsform weist die Acrylatdispersion in homogener Phase dispergierte Acrylatpolymerteilchen auf. Besonders bevorzugt ist der Schaumstoff mit einem Gewichtsanteil an Acrylatdispersion zur verzögerten Rückstellung derart imprägniert, dass das Dichtband bei 20°C und 50% relativer Luftfeuchtigkeit eine Rückstellung in weniger als 24 Stunden von einem Kompressionsgrad des Dichtbandes von ca. 9% bis 13% bis zum Fugenverschluss aufweist.

Bevorzugt weist ein zur verzögerten Rückstellung imprägnierter Schaumstoff eine Luftdurchlässigkeit in einem Bereich von 50 bis 1.000 l/(m²s), mehr bevorzugt zwischen 60 und 600 l/(m²s) und besonders bevorzugt zwischen 80 und 400 l/(m²s) auf. Die im Rahmen dieser Anmeldung getätigten Angaben zur Luftdurchlässigkeit beziehen sich auf eine Bestimmung unter den Normbedingungen eines 10 mm dicken Schaumstückes (vollständig entspannt) bei einem Messunterdruck von 1,0 bar, Prüffläche 100 cm²; Frank-Gerät 21443; DIN ISO 9237.

Schließlich ist es von Vorteil, dass die Unterseite des Dichtbands eine Klebeschicht zur Verbindung des Dichtbands mit einem Rahmenelement aufweist. Die Klebeschicht ist dadurch quer zur Mehrzahl von Sperrschichten angeordnet. Die Unterseite des Dichtbands ist im zur Dichtbandrolle aufgewickelten Zustand radial nach außen gerichtet. Das Dichtband lässt sich dadurch entlang eines Rahmenelements abrollen und schnell mittels der Klebeschicht an diesem befestigen. Die Klebeschicht ist vorzugsweise als doppelseitiges Klebeband ausgebildet, das auf einer Außenseite mit einer abziehbaren Schutzfolie bedeckt ist. Die Klebeschicht erhöht oder sorgt für den Zusammenhalt der Dichtbandabschnitte.

Weitere Merkmale und Vorteile der vorliegenden Erfindung ergeben sich aus der nachfolgenden Beschreibung unter Bezugnahme auf die Zeichnungen.
- Fig. 1: zeigt eine bevorzugte Ausführungsform einer erfindungsgemäßen Dichtbandrolle in einer isometrischen Ansicht;
- Fig. 2: zeigt eine Schaumstoff-Sperrschicht-Bahn zur Herstellung eines Dichtbands der erfindungsgemäßen Dichtbandrolle;
- Fig. 3: zeigt eine Ausführungsform eines nach Fig. 2 hergestellten Dichtbands in einer Querschnittsansicht;
- Fig. 4: zeigt eine Schaumstoff-Sperrschicht-Bahn zur Herstellung einer alternativen Ausführungsform eines Dichtbands der erfindungsgemäßen Dichtbandrolle;
- Fig. 5: zeigt eine Ausführungsform eines nach Fig. 4 hergestellten Dichtbands in einer Querschnittsansicht; und
- Fig. 6a, 6b: zeigen eine Einbausituation eines Dichtbands der erfindungsgemäßen Dichtbandrolle in zwei unterschiedlichen Querschnittsansichten.

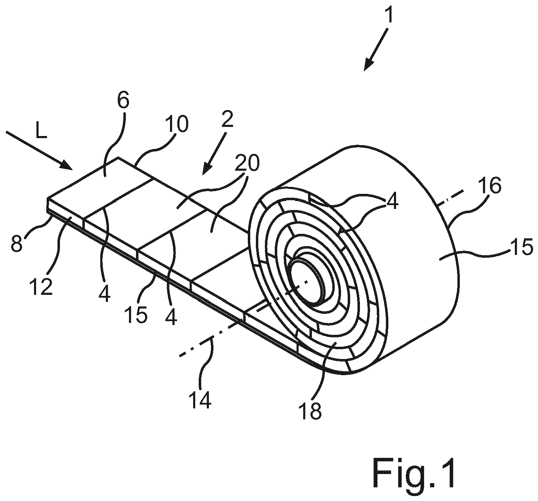

Fig. 1 zeigt eine erfindungsgemäße Dichtbandrolle 1 in einer isometrischen Ansicht. Die Dichtbandrolle 1 umfasst ein aufgewickeltes Dichtband 2. Das Dichtband 2 ist in Fig. 1 teilweise von der Dichtbandrolle 1 abgewickelt dargestellt, wobei ein bezüglich der Dichtbandrolle 1 äußeres Ende des Dichtbands 2 nicht zur Dichtbandrolle 1 aufgewickelt ist. In der dargestellten Ausgestaltung ist das Dichtband 2 zur verzögerten Rückstellung imprägniert und hat sich nach der Abwicklung noch nicht in Richtung senkrecht zur Längsrichtung L des Dichtbands 2 aus dem komprimierten Zustand in den expandierten Zustand zurückgestellt. Die Dicke des Dichtbands 2 im expandierten Zustand beträgt üblicherweise das 2-fache bis 20-fache der Dicke des Dichtbands 2 im komprimierten Zustand in der Dichtbandrolle 1.

Das Dichtband 2 besteht aus weichem, komprimierbarem Schaumstoff und weist eine Mehrzahl innenliegender Sperrschichten 4 auf. Ferner weist das Dichtband eine Oberseite 6, eine Unterseite 8 und zwei die Oberseite 6 und die Unterseite 8 verbindende Seitenflanken 10, 12 auf. Die Längsrichtung L des Dichtbands 2 ist parallel zur Unterseite 8 und zu den Seitenflanken 10, 12 ausgerichtet. Im abgewickelten Zustand des Dichtbands 2 liegt dieses auf einer ebenen Oberfläche, beispielsweise auf einer Außenseite eines Rahmenelements auf, wobei in diesem Zustand die Seitenflanken 10, 12 senkrecht zur Oberseite 6 und zur Unterseite 8 ausgerichtet sind und sich das Dichtband 2 in einem vollständig expandierten Zustand befindet. Bevorzugt wird das Dichtband 2 komprimiert zur Dichtbandrolle 1 aufgewickelt, um eine platzsparende Lagerung der Dichtbandrollen 1 zu ermöglichen. Im komprimierten Zustand des Dichtbands 2 weisen die Seitenflanken 10, 12 eine geringere Höhe auf als im expandierten Zustand des Dichtbands 2. D. h., dass der Abstand zwischen der Oberseite 6 und der Unterseite 8 im komprimierten Zustand geringer ist als im expandierten Zustand. Der Abstand zwischen den Seitenflanken 10, 12 bleibt beim Komprimieren des Dichtbands 2 im Wesentlichen unverändert.

Das Dichtband 2 ist um eine Achse 14, die sich senkrecht zur Längsrichtung L des Dichtbands 2 erstreckt, zur Dichtbandrolle 1 aufgewickelt. Die Achse 14 ist auch senkrecht zu den Seitenflanken 10, 12 des Dichtbands 2 ausgerichtet. In der Dichtbandrolle 1 liegt die Oberseite 6 einer Windung an der Unterseite 8 einer angrenzenden Windung der Dichtbandrolle 1 an und die Seitenflanken 10, 12 des Dichtbands 2 bilden die Stirnflächen 16, 18 der Dichtbandrolle 1. Ferner ist das Dichtband 2 derart zur Dichtbandrolle 1 aufgewickelt, dass die Unterseite 8 bezüglich der Achse 14 bzw. der Dichtbandrolle 1 radial nach außen gerichtet ist, während die Oberseite 6 des Dichtbands radial nach innen gerichtet ist. Die Unterseite 8 der äußersten Windung des Dichtbands 2 der Dichtbandrolle 1 bildet somit eine Mantelfläche der Dichtbandrolle 1.

Vorzugsweise weist die Unterseite 8 des Dichtbands 2 eine Klebeschicht 15 zur Verbindung des Dichtbands 2 mit einem Rahmenelement auf. Beispielsweise wird diese Klebeschicht durch ein doppelseitiges Klebeband gebildet, das mit einer Klebefläche an der Unterseite 8 des Dichtbands 2 befestigt ist und dessen gegenüberliegende, von der Unterseite 8 abgewandte Klebefläche mit einer Abdeckschicht bedeckt ist, um die Klebefläche zu schützen und ein Verkleben der einzelnen Windungen der Dichtbandrolle 1 zu vermeiden. Zur Montage des Dichtbands 2 ist eine solche Abdeckschicht von der Klebeschicht stückweise abzuziehen und die Dichtbandrolle 1 ist entlang einer Außenfläche eines Rahmenelements abzurollen. Die Abdeckschicht besteht beispielsweise aus Silikonpapier. Durch die Klebeschicht 15 wird dabei die Unterseite 8 des Dichtbands 2 mit dem Rahmenelement verbunden. Es können auch zunächst Dichtbandstreifen von der Dichtbandrolle 1 in der benötigten Länge abgeschnitten werden, die dann am Rahmenelement befestigt werden.

Das Dichtband 2 weist eine Mehrzahl von Dichtbandabschnitten 20 auf, die im abgewickelten Zustand des Dichtbands 2 in Längsrichtung L hintereinander angeordnet sind. Zwischen jeweils zwei aneinander angrenzenden Dichtbandabschnitten 20 der Mehrzahl von Dichtbandabschnitten 20 ist eine Sperrschicht 4 der Mehrzahl von Sperrschichten 4 angeordnet. Eine Wasserdampfdiffusion in Längsrichtung L des Dichtbands 2 ist somit im Wesentlichen nur durch die Mehrzahl von Sperrschichten 4 hindurch möglich.

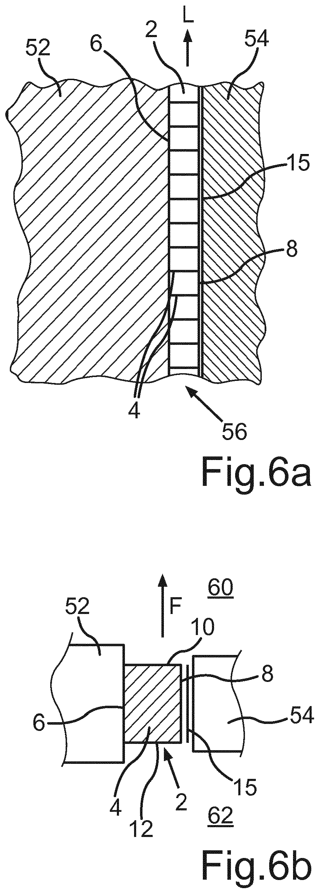

In der Dichtbandrolle 1 verläuft die Mehrzahl von Sperrschichten 4 zwischen einer Stirnfläche 16 zur gegenüberliegenden Stirnfläche 18 der Dichtbandrolle 1, vorzugsweise durchgehend von der Stirnfläche 16 zur gegenüberliegenden Stirnfläche 18. Daraus folgt, dass sich bei der üblichen und vorgesehenen Montage des Dichtbands 2, bei der die Unterseite 8 des Dichtbands 2 an einer Außenseite eines Rahmenelements angebracht wird, die Sperrschichten 4 zwischen dem Rahmenelement und einer Gebäudemauer, die zwischen sich eine abzudichtende Fuge bilden, sowie zwischen einer Rauminnenseite und einer Raumaußenseite erstrecken, nicht jedoch entlang der Fuge in Längsrichtung des Dichtbands 2, wie detailliert unter Bezugnahme auf Fig. 6 beschrieben ist.

Die Mehrzahl von Sperrschichten 4 kann sich auch nur über einen Teil der Breite der Dichtbandrolle 1 zwischen den Stirnflächen 16, 18 erstrecken. Um den gewünschten Effekt zu erzielen erstreckt sich die Mehrzahl von Sperrschichten 4 über mindestens 50% der Breite der Dichtbandrolle 1 und des Dichtbands 2. Jede Sperrschicht 4 kann z.B. mittig oder außermittig zwischen den Seitenflanken 10, 12 angeordnet sein oder sich ausgehend von einer der Seitenflanken 10, 12 in Richtung der jeweils anderen Seitenflanke 10, 12 erstrecken. Zwischen zumindest einem einer Seitenflanke 10, 12 zugewandten Rand der Mehrzahl von Sperrschichten 4 und der entsprechenden Seitenflanke 10, 12 verbleibt dann ein Bereich, der keine Sperrschicht aufweist und durch den eine Wasserdampfdiffusion im Wesentlichen ungehindert möglich ist. Folglich ist ein solcher Bereich möglichst klein auszubilden. Die Sperrschichten 4 erstrecken sich daher jeweils über mindestens 50 %, vorzugsweise über mindestens 75% und noch mehr bevorzugt über mindestens 90 % der Breite des Dichtbands 2 zwischen den Seitenflanken 10, 12.

In der bevorzugten Ausführungsform nach Fig. 1 ist die Mehrzahl von Sperrschichten 4 senkrecht zur Oberseite 6, zur Unterseite 8 und zu den Seitenflanken 10, 12 angeordnet. Die Sperrschichten 4 erstrecken sich somit axial durch die Dichtbandrolle 1. Genauer bildet jede Sperrschicht 4 eine Ebene, die bezüglich der Dichtbandrolle 1 und deren Achse 14 eine radiale und eine axiale Komponente aufweist.

Die Sperrschichten 4 sind in Fig. 1 so dargestellt, dass sie sich durchgehend von der Oberseite 6 zur Unterseite 8 des Dichtbands 2 erstrecken. Da sich die Sperrschichten 4 zudem vollständig von der linken Seitenflanke 10 zur rechten Seitenflanke 12 erstrecken, besteht das Dichtband 2 in einem Querschnitt durch eine der Sperrschichten 4 ausschließlich aus der jeweiligen Sperrschicht 4. Eine Wasserdampfdiffusion in Längsrichtung L innerhalb des Dichtbands 2 ist in diesem Fall nur durch die einzelnen Sperrschichten 4 hindurch möglich. Die Wasserdampfdiffusion innerhalb des Dichtbands 2 in Längsrichtung L kann somit über den Wasserdampfdiffusionswiderstand der Sperrschichten 4 gezielt eingestellt werden.

Die an eine Sperrschicht 4 angrenzenden Dichtbandabschnitte 20 sind in diesem Ausführungsbeispiel entweder durch die Sperrschicht 4 selbst verbunden, beispielsweise jeweils mit dieser verklebt. Es kann aber auch eine Klebeschicht auf der Oberseite 6 und/oder der Unterseite 8 des Dichtbands 2 vorgesehen sein, um die Dichtbandabschnitte 20 in Längsrichtung L miteinander zu verbinden. Diese Klebeschicht kann z.B. durch die Klebeschicht 15 auf der Unterseite 8 des Dichtbands 2 zur Befestigung am Rahmenelement gebildet werden.

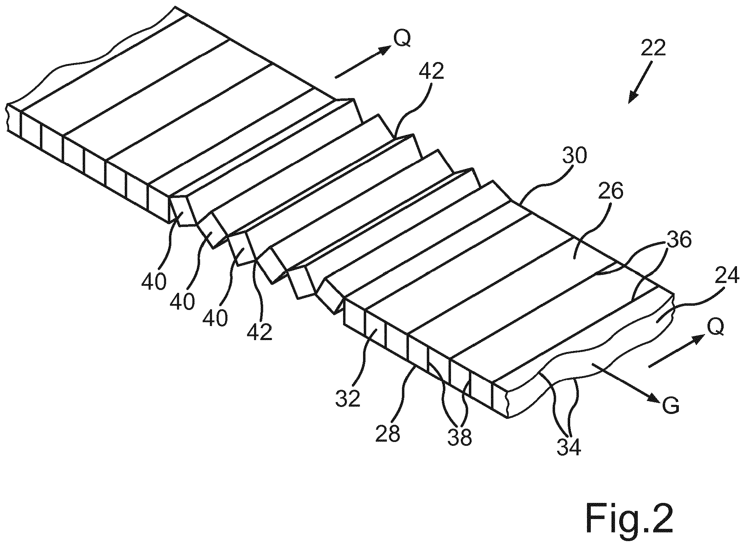

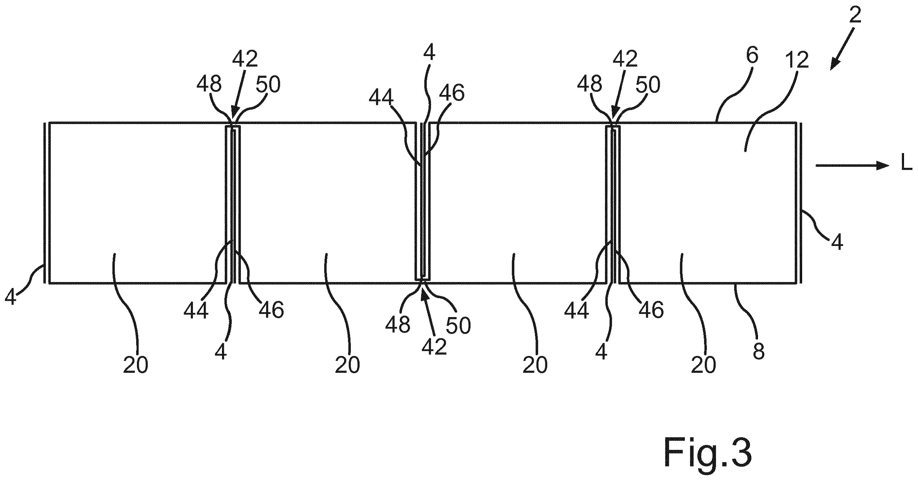

In einer alternativen Ausführungsform erstreckt sich die Mehrzahl von Sperrschichten 4 nur teilweise zwischen der Oberseite 6 und der Unterseite 8 des Dichtbands 2. Die Sperrschichten 4 erstrecken sich dann ausgehend von einer aus Ober- und Unterseite 6, 8 in Richtung der jeweils anderen aus Ober- und Unterseite 6, 8 so weit, dass ein Steg aus Schaumstoff zwischen der jeweiligen Sperrschicht und der anderen aus Ober- und Unterseite 6, 8 verbleibt. Dieser Steg aus Schaumstoff verbindet die jeweils angrenzenden Dichtbandabschnitte 20. Es ist daher möglich, dass eine Wasserdampfdiffusion in Längsrichtung L zwischen zwei aneinander angrenzenden Dichtbandabschnitten 20 durch diese Stege aus Schaumstoff und um die jeweilige Sperrschicht 4 herum stattfindet. Die Stege aus Schaumstoff sind daher möglichst klein zu gestalten, wobei eine Höhe der Stege von maximal 1 bis 2 mm bevorzugt ist. Der überwiegende Anteil des Querschnitts in diesem Bereich umfasst dann eine Sperrschicht 4, wodurch die Nachteile dieser Ausführungsform minimiert werden. Demgegenüber weist diese Ausführungsform jedoch den großen Vorteil einer einfachen Herstellung auf, wie nachfolgend unter Bezugnahme auf die Fig. 2 und 3 beschrieben ist.

Fig. 2 zeigt in einer isometrischen Ansicht einen Ausschnitt einer Schaumstoff-Sperrschicht-Bahn 22 zur Herstellung eines Dichtbands 2 für eine erfindungsgemäße Dichtbandrolle 1. Die Schaumstoff-Sperrschicht-Bahn 22 umfasst eine Schaumstoffbahn 24. Die Schaumstoffbahn 24 weist eine Oberseite 26, eine Unterseite 28 und zwei die Oberseite 26 und die Unterseite 28 verbindende Seitenflanken 30, 32 sowie eine Längsrichtung G auf, die parallel zur Unterseite 28 und den Seitenflanken 30, 32 der Schaumstoffbahn 24 ausgerichtet ist. Die Schaumstoff-Sperrschicht-Bahn 22 umfasst ferner ein Sperrschichtmaterial 34 auf zumindest einer aus Oberseite 26 und Unterseite 28 der Schaumstoffbahn 24. In der dargestellten Ausführungsform ist ein Sperrschichtmaterial 34 auf der Oberseite 26 und der Unterseite 28 der Schaumstoffbahn 24 aufgetragen.

Um ein Dichtband 2 mit innenliegenden Sperrschichten 4 herzustellen, werden in die Schaumstoff-Sperrschicht-Bahn 22 erste Einschnitte 36 und zweite Einschnitte 38 eingebracht. Die ersten Einschnitte 36 werden in die Oberseite 26 der Schaumstoffbahn 24 in einer Querrichtung Q der Schaumstoffbahn 24 eingebracht, erstrecken sich durchgehend zwischen den Seitenflanken 30, 32 der Schaumstoffbahn 24 und sind vorzugsweise sowohl senkrecht zur Oberseite 26 als auch senkrecht zu den Seitenflanken 30, 32 ausgerichtet. Ist ein Sperrschichtmaterial 34 auf der Oberseite 26 der Schaumstoffbahn 24 aufgebracht, durchtrennt der erste Einschnitt 36 dieses Sperrschichtmaterial 34. Die zweiten Einschnitte 38 werden in die Unterseite 28 der Schaumstoffbahn 24 in der Querrichtung Q sowie in Längsrichtung G versetzt zu den ersten Einschnitten 36 eingebracht, erstrecken sich durchgehend zwischen den Seitenflanken 30, 32 der Schaumstoffbahn 24 und sind vorzugsweise sowohl senkrecht zur Unterseite 28 als auch senkrecht zu den Seitenflanken 30, 32 ausgerichtet. Ist ein Sperrschichtmaterial 34 auf der Unterseite 28 der Schaumstoffbahn 24 aufgebracht, durchtrennen die zweiten Einschnitte 36 dieses Sperrschichtmaterial 34. Dadurch werden parallel verlaufende Streifen 40 der Schaumstoff-Sperrschicht-Bahn 22 gebildet. Vorzugsweise sind die ersten und die zweiten Einschnitte 36, 38 in konstanten Abständen zueinander angeordnet. Durch die Angaben "erste" und "zweite" soll keine zeitliche Reihenfolge des Einbringens der Einschnitte in die Schaumstoffbahn-Sperrschicht-Bahn festgelegt sein. So kann beispielsweise das Einbringen eines zweiten Einschnitts auch vor dem Einbringen eines ersten Einschnitts erfolgen. Es können auch alle Einschnitte gleichzeitig in die Schaumstoffbahn-Sperrschicht-Bahn eingebracht werden.

Die ersten und zweiten Einschnitte 36, 38 durchdringen die Schaumstoff-Sperrschicht-Bahn 22 nicht vollständig. Vielmehr verbleibt zwischen zwei aneinander angrenzenden Streifen 40 ein Verbindungsbereich 42.

Durchtrennen die ersten und zweiten Einschnitte 36, 38 die Schaumstoffbahn 24 vollständig, kann ein Verbindungsbereich 42 bei einem ersten Einschnitt 36 nur durch das Sperrschichtmaterial 34 auf der Unterseite 28 und bei einem zweiten Einschnitt 38 nur durch das Sperrschichtmaterial 34 auf der Oberseite 26 der Schaumstoffbahn 24 gebildet werden. Durchtrennen die ersten und zweiten Einschnitte 36, 38 die Schaumstoffbahn 24 nicht vollständig, verbleibt am Ende des jeweiligen Einschnitts ein Schaumstoffsteg, wie in Fig. 3 ersichtlich ist. Der Verbindungsbereich 42 umfasst dann diesen Schaumstoffsteg. Ist ein Schaumstoffsteg vorhanden, ist nicht zwingend ein Sperrschichtmaterial 34 zur Verbindung der aneinander angrenzenden Streifen 40 vorzusehen, sondern lediglich zumindest ein Sperrschichtmaterial 34 zur Bildung einer Sperrschicht 4. Ein Verbindungsbereich 42 kann aber auch einen Schaumstoffsteg und ein Sperrschichtmaterial umfassen.

Zum Herstellen eines Dichtbands 2 mit innenliegenden Sperrschichten 4 sind die Streifen 40 entlang der Verbindungsbereiche 42 derart umzuklappen, dass sich Teilabschnitte der Oberseite 26 der Schaumstoffbahn 24, die jeweils an einen gemeinsamen Verbindungsbereich 42 angrenzen, gegenüberliegen und sich Teilabschnitte der Unterseite 28 der Schaumstoffbahn 24, die jeweils an einen gemeinsamen Verbindungsbereich 42 angrenzen, gegenüberliegen. Die durch die ersten und/oder zweiten Einschnitte 36, 38 gebildeten einzelnen Abschnitte des Sperrschichtmaterials 34 werden dadurch im Inneren des Dichtbands 2 angeordnet und bilden jeweils eine Sperrschicht 4, wie aus Fig. 3 hervorgeht. Ist die aus der Schaumstoff-Sperrschicht-Bahn 22 gebildete Bahn mit innenliegenden Sperrschichten 4 breiter, als dies für die herzustellenden Dichtbänder 2 gewünscht ist, kann die Bahn durch Einbringen von Schnitten in Längsrichtung, also parallel zu den Seitenflanken und in die Ober- und/oder Unterseite der Bahn in eine Mehrzahl von Dichtbändern getrennt werden.

Fig. 3 zeigt ein zur erfindungsgemäßen Dichtbandrolle 1 aufwickelbares Dichtband 2 in einer Querschnittsansicht in Längsrichtung L des Dichtbands 2. Das Dichtband 2 kann wie zuvor zur Fig. 2 beschrieben hergestellt werden. Das Dichtband 2 kann aber auch dadurch hergestellt werden, dass ein Schaumstoffstreifen bereitgestellt wird, mit Einschnitten in seiner Ober- und/oder Unterseite versehen wird und eine Sperrschicht in jeden dieser Einschnitte eingefügt ist. Dem Fachmann sind alternative Möglichkeiten bekannt, ein Dichtband mit innenliegenden Sperrschichten zu bilden.

Das Dichtband 2 weist eine Mehrzahl von Dichtbandabschnitten 20 auf, die im abgewickelten Zustand des Dichtbands 2 zur Längsrichtung L hintereinander angeordnet sind. Zwischen jeweils zwei aneinander angrenzenden Dichtbandabschnitten 20 ist jeweils eine Sperrschicht 4 angeordnet. Jede Sperrschicht 4 kann einlagig oder mehrlagig ausgebildet sein.

In der dargestellten bevorzugten Ausführungsform weist zumindest eine Sperrschicht 4 zwei Sperrschichtabschnitte 44, 46 auf, wobei jeweils ein Sperrschichtabschnitt 44, 46 mit einem der an die Sperrschicht 4 angrenzenden Dichtbandabschnitte 20 verbunden ist. Diese Verbindung kann beispielsweise durch Auflaminieren oder Aufkaschieren des Sperrschichtmaterials 34 auf die Schaumstoffbahn 24 oder durch Verkleben des Sperrschichtmaterials 34 mit der Schaumstoffbahn 24 erfolgen. Die zwei Sperrschichtabschnitte 44, 46 liegen an einander zugewandten Flächen aneinander an. Die zwei Sperrschichtabschnitte 44, 46 können auch miteinander verhaftet sein. Beispielsweise kann das Dichtband 2 erwärmt werden, um die Sperrschichtabschnitte 44, 46 miteinander zu verbinden oder es kann ein Klebstoff verwendet werden, der auf die einander zugewandten Flächen der Sperrschichtabschnitte 44, 46 aufgetragen ist. Es ist auch denkbar, dass das Sperrschichtmaterial 34 selbst eine Klebewirkung aufweist, sodass die Sperrschichtabschnitte 44, 46 aneinander haften. Ebenso ist es denkbar, dass man aufgrund der Verschmelzung der beiden Sperrschichtabschnitte 44, 46 diese zumindest in Teilbereichen optisch nicht mehr voneinander trennen kann.

In der dargestellten Ausführungsform bilden die zwei Sperrschichtabschnitte 44, 46 jeweils einen Schenkel der zumindest einen Sperrschicht 4. Diese zwei Schenkel sind durch einen Verbindungsabschnitt 48 der zumindest einen Sperrschicht 4 miteinander verbunden. Vorzugsweise ist der Verbindungsabschnitt 48 integral mit den Sperrschichtabschnitten 44, 46 ausgebildet. Wie aus der Zusammenschau der Fig. 2 und 3 hervorgeht, wird eine Sperrschicht 4 mit zwei Sperrschichtabschnitten 44, 46 und einem Verbindungsabschnitt 48 vorzugsweise dadurch erzeugt, dass zwei aneinander angrenzende Streifen 40 der Schaumstoff-Sperrschicht-Bahn 22 um einen Verbindungsbereich 42 geklappt werden. Das auf die Streifen 40 aufgebrachte Sperrschichtmaterial 34 wird dadurch nach innen geklappt, sodass die zuvor der Oberseite 26 bzw. Unterseite 28 der Schaumstoff-Sperrschicht-Bahn 22 zugeordneten Abschnitte des Sperrschichtmaterials 34 im Inneren des Dichtbands 2 einander gegenüberliegen. Durch dieses Umklappen wird das Sperrschichtmaterial 34 entlang der Verbindungsbereiche 42 gefaltet, sodass im Inneren des Dichtbands 2 eine Sperrschicht 4 entsteht, die sich im Wesentlichen senkrecht zur Unterseite 8 erstreckt und die zwei schenkelförmige Sperrschichtabschnitte 44, 46 aufweist, die durch den Verbindungsabschnitt 48 im Bereich des Verbindungsbereichs 42 verbunden sind. Der Verbindungsabschnitt 48 ist folglich an einem Ende der schenkelförmigen Sperrschichtabschnitte 44, 46 ausgebildet. Eine Sperrschicht 4 mit zwei Sperrschichtabschnitten 44, 46 und einem Verbindungsabschnitt 48 kann aber auch dadurch gebildet werden, dass eine V- oder U-förmige Folie in einen zuvor erzeugten Einschnitt im Dichtband eingefügt wird.

Im dargestellten Ausführungsbeispiel entsteht der Verbindungsabschnitt 48 der Sperrschicht 4 jedoch durch Umklappen bzw. Falten der Sperrschicht 4 bzw. des Sperrschichtmaterials 34 entlang des Verbindungsbereichs 42 und ist daher vorzugsweise U- oder V-förmig ausgebildet und im Bereich der Oberseite 6 oder der Unterseite 8 des Dichtbands 2 angeordnet. Eine U-Form ergibt sich beispielsweise, wenn die Sperrschicht 4 entlang des Verbindungsbereichs 42 umgeklappt wird, ohne dass sie dabei knickt oder einen Druck in Längsrichtung L erfährt. Knickt die Sperrschicht 4 im Bereich des Verbindungsbereichs 42 oder wird das Dichtband 2 in Längsrichtung L mit Druck beaufschlagt bzw. gestaucht, weist der Verbindungsabschnitt 48 tendenziell eine V-Form auf. Weitere geometrische Ausbildungen des Verbindungsabschnitts 48 sind möglich. Alle diese genannten Geometrien des Verbindungsabschnitts 48 kann man als Schlaufe bezeichnen, auch wenn die Schenkel der Schlaufe in der Regel aneinander gepresst sind.

Wie in Fig. 3 zu sehen ist, sind die Verbindungsabschnitte 48 im Bereich der Oberseite 6 oder der Unterseite 8 des Dichtbands 2 angeordnet. Je nach Tiefe der ersten und zweiten Einschnitte 36, 38 verbleibt wahlweise ein Schaumstoffsteg 50 zwischen zwei aneinandergrenzenden Streifen 40 bzw. Dichtbandabschnitten 20, dessen Höhe wählbar ist. Werden die Verbindungsbereiche 42 nur durch die Verbindungsabschnitte 48 der Sperrschichten 4 gebildet, bilden diese im Bereich der Verbindungsbereiche 42 eine Art Scharnierverbindung, die die beiden angrenzenden Streifen 40 gelenkig miteinander verbindet. Es ist jedoch zu berücksichtigen, dass mit zunehmender Höhe des Schaumstoffstegs 50 das nachfolgende Umklappen der Streifen 40 im Bereich der Verbindungsbereiche 42, die einen Schaumstoffsteg 50 umfassen, erschwert wird. Die Schaumstoffstege 50 eignen sich insbesondere dazu, die Sperrschichten 4 bzw. das Sperrschichtmaterial 34 beim Einbringen der ersten und zweiten Einschnitte 36, 38 vor Beschädigung zu schützen.

Um ein einfaches Umklappen der Streifen 40 entlang der Verbindungsbereiche 42 zu ermöglichen, sind die Verbindungsbereiche 42 folglich möglichst dünn zu gestalten. Die dünnstmöglichen Verbindungsbereiche 42 werden nur das Sperrschichtmaterial 34 gebildet. Da dieses aber schon bei geringfügigen Abweichungen beim Schneidvorgang durchtrennt werden kann, bietet es sich an, zusätzlich dünne Schaumstoffstege 50 beim Einschneiden stehen zu lassen, die zu den Verbindungsbereichen 42 beitragen. Vorzugsweise weist der mindestens eine Schaumstoffsteg 50 eine Höhe von maximal 10 mm, mehr bevorzugt von maximal 5 mm und noch mehr bevorzugt von maximal 1 bis 2 mm auf. Werden keine Stege 50 aus Schaumstoff gebildet, können die Verbindungsabschnitte 48 mit der Oberseite 6 bzw. Unterseite 8 des Dichtbands 2 zusammenfallen.

Wie sich weiterhin aus der Zusammenschau der Fig. 2 und 3 ergibt, weisen in dieser bevorzugten Ausführungsform mindestens zwei Sperrschichten 4 jeweils zwei Sperrschichtabschnitte 44, 46 und einen Verbindungsabschnitt 48 auf. Die Verbindungsabschnitte 48 sind in Längsrichtung L des Dichtbands 2 abwechselnd im Bereich der Oberseite 6 und der Unterseite 8 des Dichtbands 2 angeordnet. Dies ergibt sich daraus, dass die Streifen 40 der Schaumstoff-Sperrschicht-Bahn 22 abwechselnd um einen Verbindungsbereich 42 an der Oberseite 26 der Schaumstoff-Sperrschicht-Bahn 22 und einen Verbindungsbereich 42 an der Unterseite 28 der Schaumstoff-Sperrschicht-Bahn 22 geklappt werden. Auch wenn die Sperrschichten 4 lediglich einlagig ausgebildet sind, das Dichtband 2 aber nicht vollständig durchdringen, erstrecken sie sich vorzugsweise in Längsrichtung L abwechselnd von der Oberseite 6 und der Unterseite 8 in das Dichtband.

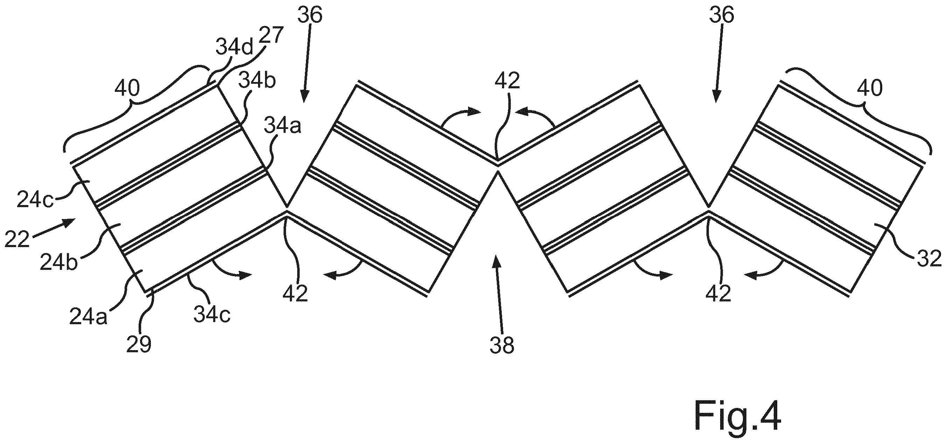

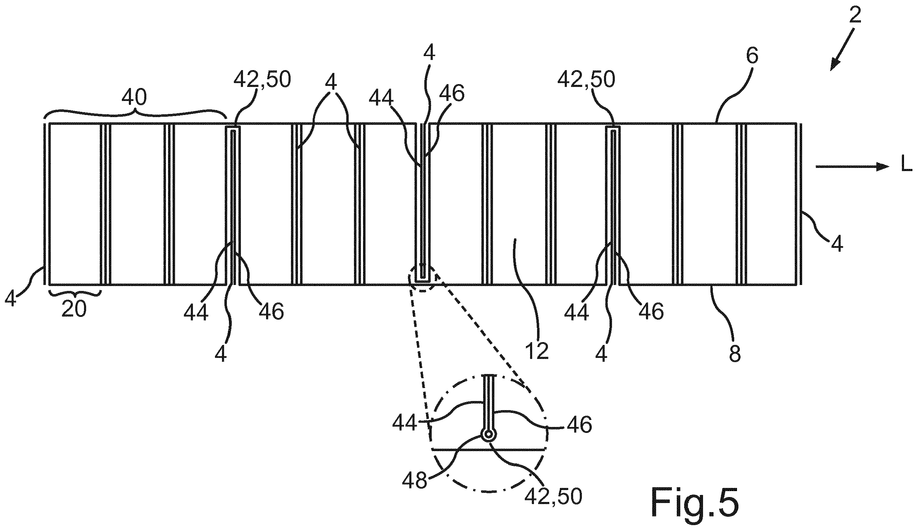

In Fig. 4 und 5 ist eine alternative Ausführungsform dargestellt, bei der ein Dichtband 2 aus einer mehrlagigen Schaumstoff-Sperrschicht-Bahn 22 gebildet wird. Die mehrlagige Schaumstoff-Sperrschicht-Bahn 22 weist eine erste Schaumstoffbahn 24a, eine zweite Schaumstoffbahn 24b und eine dritte Schaumstoffbahn 24c auf, die übereinander angeordnet sind. Zwischen zwei übereinander angeordneten Schaumstoffbahnen 24a, b, c ist jeweils eine Lage Sperrschichtmaterial 34a, b angeordnet. So ist zwischen der ersten Schaumstoffbahn 24a und der zweiten Schaumstoffbahn 24b eine erste Lage Sperrschichtmaterial 34a angeordnet und zwischen der zweiten Schaumstoffbahn 24b und der dritten Schaumstoffbahn 24c ist eine zweite Lage Sperrschichtmaterial 34b angeordnet. Zumindest an einer aus Oberseite 27 oder der Unterseite 29 der Schaumstoff-Sperrschicht-Bahn 22, hier sowohl an der Oberseite 27 als auch an der Unterseite 29 ist eine weitere Lage Sperrschichtmaterial 34c, d angeordnet. Auf diese Weise können mehrlagige Schaumstoff-Sperrschicht-Bahnen 22 mit beliebig vielen Schaumstoffbahnen 24 und beliebig vielen Lagen Sperrschichtmaterial 34 gebildet werden. Die Schaumstoffbahnen 24 a, b, c werden auf dem Fachmann bekannte Art und Weise mit den jeweiligen Lagen Sperrschichtmaterial 34 a, b, c, d verbunden.

Erste Einschnitte 36 werden in die Oberseite 27 der Schaumstoff-Sperrschicht-Bahn 22 eingebracht, zweite Einschnitte 38 werden in die Unterseite 29 der Schaumstoff-Sperrschicht-Bahn 22 senkrecht eingebracht. Bezüglich der Ausbildung der ersten und zweiten Einschnitte 36, 38 wird auf die Ausführungen zu Fig. 2 und 3 verwiesen, die auch auf dieses Ausführungsbeispiel anzuwenden sind.

Auf diese Weise werden Streifen 40 aus der Schaumstoff-Sperrschicht-Bahn 22 gebildet, die in Längsrichtung G hintereinander angeordnet sind, wobei jeweils zwei aufeinanderfolgende Streifen 40 durch einen Verbindungsbereich 42 miteinander verbunden sind. Durch Umklappen der Streifen 40 entlang der Verbindungsbereiche 42 wird ein Dichtband 2 nach Fig. 5 gebildet, wobei die Abschnitte der Ober- bzw. Unterseite 27, 29 der Schaumstoff-Sperrschicht-Bahn 22 innerhalb des Dichtbands 2 angeordnet sind. Die Schnittflächen der ersten und zweiten Einschnitte 36, 38 bilden dann die Ober- bzw. Unterseite 6, 8 des Dichtbands 2.

Wie der Zusammenschau aus Fig. 4 und 5 zu entnehmen ist, bilden die Lagen des Sperrschichtmaterials 34, die entlang eines Verbindungsbereichs 42 umgeklappt werden, im Dichtband 2 Sperrschichten 4 mit jeweils zwei Sperrschichtabschnitten 44, 46 und einem Verbindungsabschnitt 48, wie bereits zu Fig. 3 beschrieben. Sperrschichtmateriallagen 34, die durch die ersten und zweiten Einschnitte 36, 38 durchtrennt wurden und folglich nicht gefaltet werden, hier also Abschnitte der ersten und zweiten Sperrschichtmateriallagen 34a, b der einzelnen Streifen 40, bilden im Dichtband 2 jeweils eine einlagige Sperrschicht 4, die sich von der Oberseite 6 zur Unterseite 8 des Dichtbands 2 erstreckt.

Auf diese Weise wird ein Dichtband gebildet, bei dem zwischen den mindestens zwei Sperrschichten 4, die zwei Sperrschichtabschnitte 44, 46 und einen Verbindungsabschnitt 48 aufweisen, mindestens eine einlagige Sperrschicht 4 angeordnet ist, die nur einen Sperrschichtabschnitt aufweist und sich von der Oberseite 6 zur Unterseite 8 des Dichtbands 2 erstreckt.

In der Detailansicht in Fig. 5 sind die Sperrschichtabschnitt 44, 46 und der Verbindungsabschnitt 48 einer Sperrschicht 4 vergrößert dargestellt. Der Verbindungsabschnitt 48 ist schlaufenförmig ausgebildet, hier im Wesentlichen in U-Form. Ebenso ist der Schaumstoffsteg 50 zu erkennen, der die aneinander angrenzenden Dichtbandabschnitte 20 miteinander verbindet und Teil des Verbindungsbereichs 42 bildet.

Fig. 6a und 6b zeigen jeweils einen Querschnitt durch einen Bauwerksabschnitt, der eine Gebäudemauer 52, ein Rahmenelement 54 und ein Dichtband 2 umfasst. Die Fig. 6a zeigt einen Querschnitt durch den Bauwerksabschnitt und das Dichtband 2 in einer vertikalen Ebene und die Fig. 6b zeigt einen Querschnitt durch den Bauwerksabschnitt und das Dichtband 2 in einer horizontalen Ebene.

Das Rahmenelement 54 ist dabei in eine Mauerwerksöffnung der Gebäudemauer 52 eingesetzt. Zwischen den einander zugewandten Flächen der Gebäudemauer 52 bzw. der Mauerwerksöffnung und des Rahmenelements 54 ist eine Fuge 56 ausgebildet, die sich um das Rahmenelement 54 herum erstreckt und die es abzudichten gilt. In dieser Fuge 56 ist das Dichtband 2 anzuordnen. Zur einfacheren Montage ist das Dichtband 2 vorzugsweise bereits vor dem Einsetzen des Rahmenelements 54 in die Mauerwerksöffnung an dem Rahmenelement 54 angebracht. Hierzu weist die Unterseite 8 des Dichtbands 2 eine Klebeschicht 15 auf, mittels derer das Dichtband 2 mit der der Fuge 56 zugewandten Außenseite des Rahmenelements 54 verbunden ist. Alternativ kann die Unterseite 8 des Dichtbands 2 auch mit der der Fuge zugewandten Fläche der Gebäudemauer mittels der Klebeschicht 15 verbunden sein.

Wie der Fig. 6a zu entnehmen ist, ist das Dichtband 2 auf übliche Weise derart in der Fuge 56 angeordnet, dass die Unterseite 8 des Dichtbands 2 am Rahmenelement 54 anliegt, die Oberseite 6 des Dichtbands 2 an der Gebäudemauer 52 anliegt und die Seitenflanken 10, 12 jeweils der Rauminnenseite bzw. der Raumaußenseite zugewandt sind. Das Dichtband 2 verläuft in Längsrichtung L um das Rahmenelement 54. Im Gegensatz zu herkömmlichen Dichtbändern erstrecken sich die Sperrschichten 4 jedoch erfindungsgemäß in einer Ebene von dem Rahmenelement 54 zur Gebäudemauer 52 sowie von der Rauminnenseite 62 zur Raumaußenseite 60, sodass sie im Wesentlichen keine Dämm- oder Dichtwirkung der Rauminnenseite 62 gegenüber der Raumaußenseite 60 in Funktionsrichtung F des Dichtbands bewirken. Die Sperrschichten herkömmlicher Dichtbänder erstrecken sich im Gegensatz dazu von dem Rahmenelement 54 zur Gebäudemauer 52 und parallel zu den Seitenflanken 10, 12, sodass sie sich über den gesamten Querschnitt der Fuge 56 senkrecht zur Funktionsrichtung F erstrecken, um die Rauminnenseite gegenüber der Raumaußenseite abzudichten. Solche Sperrschichten können zusätzliche zu den Sperrschichten 4 vorgesehen werden.

In Fig. 6b ist die Querschnittsansicht in einer horizontalen Ebene durch eine Sperrschicht 4 gelegt. Dabei ist zu erkennen, dass die Sperrschicht 4 sich vollständig von der Raumaußenseite 60 zur Rauminnenseite 62 sowie zumindest zum Großteil vom Rahmenelement 54 zur Gebäudemauer 52 erstreckt. Sperrschichten herkömmlicher Dichtbänder würden in dieser Ansicht senkrecht zur Zeichenebene verlaufen, um die Rauminnenseite 62 gegenüber der Raumaußenseite 60 abzudichten.

Es versteht sich, dass die erfindungsgemäße Dichtbandrolle 1 auch abweichend von den hier beschriebenen bevorzugten Ausführungsformen ausgebildet sein kann. Insbesondere muss die Sperrschicht 4 nicht zwangsläufig senkrecht zur Oberseite 6, zur Unterseite 8 sowie zu den Seitenflanken 10, 12 des Dichtbands 2 ausgerichtet sein. Vielmehr kann die Mehrzahl von Sperrschichten 4 in einem abgewickelten Zustand des Dichtbands 2 auch senkrecht zur Oberseite 6 und/oder zur Unterseite 8 sowie schräg zu den Seitenflanken 10, 12 angeordnet sein. Auf diese Weise wird ermöglicht, dass nicht nur eine Diffusion innerhalb des Dichtbands 2 in Längsrichtung L desselben beeinflusst wird, sondern in gewissem Maße auch eine Diffusion in Funktionsrichtung F des Dichtbands 2, also quer zur Längsrichtung L beeinflusst werden kann.

Alternativ kann die Mehrzahl von Sperrschichten 4 in einem abgewickelten Zustand des Dichtbands 2 auch schräg zur Oberseite 6, zur Unterseite 8 und zu den Seitenflanken 10, 12 angeordnet sein. Durch diese Vielfalt der Anordnungsmöglichkeiten der Sperrschichten 4 innerhalb des Dichtbands 2 erhöhen sich die Variations- bzw. Einstellmöglichkeiten der Eigenschaften des Dichtbands 2. Auch die Verfahren zur Herstellung erfindungsgemäßer Dichtbandrollen 1 kann dadurch beliebig angepasst werden.

Erfindungswesentlich ist jedoch stets, dass die Mehrzahl von Sperrschichten 4 einzelne in Längsrichtung L des Dichtbands 2 hintereinander angeordnete Dichtbandabschnitte 20 möglichst stark voneinander trennt, um eine Wasserdampfdiffusion innerhalb des Dichtbands 2 in Längsrichtung L des Dichtbands 2 deutlich zu reduzieren oder zu unterbinden.

Erstrecken sich eine oder mehrere der hierin beschriebenen Sperrschichten nur teilweise durch das Dichtband, erstrecken sie sich über mindestens 50% des Dichtbandquerschnitts, vorzugsweise über mindestens 75% und mehr bevorzugt über mindestens 90% des Dichtbandquerschnitts in der jeweiligen Richtung. Insbesondere erstreckt sich die Mehrzahl von Sperrschichten 4 über mindestens 50%, vorzugsweise mindestens 75%, mehr bevorzugt mindestens 90% der Breite der Dichtbandrolle 1 zwischen den einander gegenüberliegenden Stirnflächen 16, 18 der Dichtbandrolle 1. Eine parallel zu den Seitenflanken verlaufende Sperrschicht erstreckt sich über mindestens 50%, vorzugsweise mindestens 75%, mehr bevorzugt mindestens 90% der Höhe der Dichtbandrolle 1 zwischen Oberseite 6 und der Unterseite 8 der Dichtbandrolle 1.

Es versteht sich, dass die hierin gemachten Ausführungen zu den Dichtbändern und Sperrschichten auf alle hierin beschriebenen Ausführungsformen zutreffen und einzelne Merkmale der verschiedenen Ausführungsformen beliebig miteinander kombinierbar sind.

## Patentansprüche

1. Dichtbandrolle (1) aus einem Dichtband (2) aus weichem, komprimierbarem Schaumstoff mit einer Mehrzahl innenliegender Sperrschichten (4);
wobei das Dichtband (2) eine Oberseite (6), eine Unterseite (8) und zwei die Oberseite (6) und die Unterseite (8) verbindende Seitenflanken (10, 12) sowie eine Längsrichtung (L) aufweist, die parallel zur Unterseite (8) und zu den Seitenflanken (10, 12) ausgerichtet ist;
wobei das Dichtband (2) um eine Achse (14), die sich quer zur Längsrichtung (L) des Dichtbands (2) erstreckt, zur Dichtbandrolle (1) derart aufgewickelt ist, dass die Oberseite (6) einer Windung an der Unterseite (8) einer angrenzenden Windung der Dichtbandrolle (1) anliegt und die Seitenflanken (10, 12) des Dichtbands (2) Stirnflächen (16, 18) der Dichtbandrolle (1) bilden, wobei eine Breite der Dichtbandrolle (1) als der Abstand einer Stirnfläche (16) von der gegenüberliegenden Stirnfläche (18) der Dichtbandrolle (1) definiert ist;
**dadurch gekennzeichnet, dass**
das Dichtband (2) eine Mehrzahl von Dichtbandabschnitten (20) aufweist, die in einem abgewickelten Zustand des Dichtbands (2) in Längsrichtung (L) hintereinander angeordnet sind, wobei zwischen jeweils zwei aneinander angrenzenden Dichtbandabschnitten (20) der Mehrzahl von Dichtbandabschnitten (20) eine Sperrschicht (4) der Mehrzahl von Sperrschichten (4) angeordnet ist; und
sich die Mehrzahl von Sperrschichten (4) über mindestens 50% der Breite der Dichtbandrolle (1) zwischen den einander gegenüberliegenden Stirnflächen (16, 18) der Dichtbandrolle (1) erstreckt.

2. Dichtbandrolle (1) nach Anspruch 1, **dadurch gekennzeichnet, dass** die Mehrzahl von Sperrschichten (4) senkrecht zur Unterseite (8) und zu den Seitenflanken (10, 12) angeordnet ist, sodass sie sich axial bezüglich der Dichtbandrolle (1) erstreckt.

3. Dichtbandrolle (1) nach Anspruch 1, **dadurch gekennzeichnet, dass** die Mehrzahl von Sperrschichten (4) in einem abgewickelten Zustand des Dichtbands (2) schräg zur Oberseite (6) und zur Unterseite (8) sowie senkrecht zu den Seitenflanken (10, 12) angeordnet ist.

4. Dichtbandrolle (1) nach Anspruch 1, **dadurch gekennzeichnet, dass** die Mehrzahl von Sperrschichten (4) in einem abgewickelten Zustand des Dichtbands (2) senkrecht zur Unterseite (8) sowie schräg zu den Seitenflanken (10, 12) angeordnet ist.

5. Dichtbandrolle (1) nach Anspruch 1, **dadurch gekennzeichnet, dass** die Mehrzahl von Sperrschichten (4) in einem abgewickelten Zustand des Dichtbands (2) schräg zur Oberseite (6), zur Unterseite (8) und zu den Seitenflanken (10, 12) angeordnet ist.

6. Dichtbandrolle (1) nach einem der vorangehenden Ansprüche, **dadurch gekennzeichnet, dass** sich die Mehrzahl von Sperrschichten (4) durchgehend von der Oberseite (6) zur Unterseite (8) des Dichtbands (2) erstreckt.

7. Dichtbandrolle (1) nach einem der Ansprüche 1 bis 5, **dadurch gekennzeichnet, dass** sich die Mehrzahl von Sperrschichten (4) nur teilweise zwischen der Oberseite (6) und der Unterseite (8) des Dichtbands (2) erstreckt.

8. Dichtbandrolle (1) nach einem der vorangehenden Ansprüche, **dadurch gekennzeichnet, dass** zumindest eine Sperrschicht (4) der Mehrzahl von Sperrschichten (4) zwei Sperrschichtabschnitte (44, 46) aufweist, wobei jeweils ein Sperrschichtabschnitt (44, 46) an einem der an die Sperrschicht (4) angrenzenden Dichtbandabschnitte (20) flächig anliegt.

9. Dichtbandrolle (1) nach Anspruch 8, **dadurch gekennzeichnet, dass** die zwei Sperrschichtabschnitte (44, 46) miteinander verhaftet sind.

10. Dichtbandrolle (1) nach Anspruch 8 oder 9, **dadurch gekennzeichnet, dass** die zwei Sperrschichtabschnitte (44, 46) jeweils einen Schenkel der zumindest einen Sperrschicht (4) bilden und die zwei Schenkel durch einen Verbindungsabschnitt (48) der zumindest einen Sperrschicht (4) miteinander verbunden sind.

11. Dichtbandrolle (1) nach Anspruch 10, **dadurch gekennzeichnet, dass** der Verbindungsabschnitt (48) der zumindest einen Sperrschicht (4) U- oder V-förmig ausgebildet ist und im Bereich der Oberseite (6) oder der Unterseite (8) des Dichtbands (2) angeordnet ist.

12. Dichtbandrolle (1) nach Anspruch 10 oder 11, **dadurch gekennzeichnet, dass** mindestens zwei Sperrschichten (4) der Mehrzahl von Sperrschichten (4) jeweils zwei Sperrschichtabschnitte (44, 46) und einen Verbindungsabschnitt (48) aufweisen und die in Längsrichtung (L) des Dichtbands (2) aufeinander folgenden Verbindungsabschnitte (48) der mindestens zwei Sperrschichten (4) abwechselnd im Bereich der Oberseite (6) und der Unterseite (8) des Dichtbands (2) angeordnet sind.

13. Dichtbandrolle (1) nach Anspruch 12, **dadurch gekennzeichnet, dass** zwischen den mindestens zwei Sperrschichten (4), die zwei Sperrschichtabschnitte (44, 46) und einen Verbindungsabschnitt (48) aufweisen, mindestens eine Sperrschicht (4) angeordnet ist, die nur einen Sperrschichtabschnitt aufweist, der sich vorzugsweise durchgehend von der Oberseite (6) zur Unterseite (8) des Dichtbands (2) erstreckt.

14. Dichtbandrolle (1) nach einem der vorangehenden Ansprüche, **dadurch gekennzeichnet, dass** die Sperrschichten (4) in einem abgewickelten Zustand des Dichtbands (2) parallel zueinander angeordnet sind.

15. Dichtbandrolle (1) nach einem der vorangehenden Ansprüche, **dadurch gekennzeichnet, dass** die Mehrzahl von Sperrschichten (4) aus einem folienartigen Material oder einem Klebstoff, insbesondere aus einem Folienstreifen, einem Klebebandstreifen oder einem klebstoffartigen flüssigen Medium gebildet ist.

16. Dichtbandrolle (1) nach einem der vorangehenden Ansprüche, **dadurch gekennzeichnet, dass** die Unterseite (8) des Dichtbands (2) eine Klebeschicht (15) zur Verbindung des Dichtbands (2) mit einem Rahmenelement (54) aufweist.

17. Dichtbandrolle nach einem der vorangehenden Ansprüche, **dadurch gekennzeichnet, dass** die Mehrzahl von Sperrschichten (4) durchgehend von einer Stirnfläche (16) der Dichtbandrolle (1) zur gegenüberliegenden Stirnfläche (18) der Dichtbandrolle (1) verläuft.

## Claims

1. Sealing tape roll (1) of a sealing tape (2) made of soft, compressible foam with a plurality of internal barrier layers (4);
wherein the sealing tape (2) has a top side (6), a bottom side (8) and two side flanks (10, 12), connecting the top side (6) and the bottom side (8), and has a longitudinal direction (L) which is oriented parallel to the bottom side (8) and to the side flanks (10, 12);
wherein the sealing tape (2) is wound up about an axis (14), which extends transversely with respect to the longitudinal direction (L) of the sealing tape (2), to form the sealing tape roll (1) in such a manner that the top side (6) of a winding bears against the bottom side (8) of an adjacent winding of the sealing tape roll (1) and the side flanks (10, 12) of the sealing tape (2) form end faces (16, 18) of the sealing tape roll (1), wherein a width of the sealing tape roll (1) is defined as the distance of an end face (16) from the opposite end face (18) of the sealing tape roll (1);
**characterized in that**
the sealing tape (2) has a plurality of sealing tape portions (20) which are arranged one behind another in the longitudinal direction (L) in an unwound state of the sealing tape (2), wherein a barrier layer (4) of the plurality of barrier layers (4) is arranged between respectively two mutually adjacent sealing tape portions (20) of the plurality of sealing tape portions (20); and
the plurality of barrier layers (4) extends over at least 50% of the width of the sealing tape roll (1) between the end faces (16, 18) which lie opposite one another of the sealing tape roll (1).

2. Sealing tape roll (1) according to Claim 1, **characterized in that** the plurality of barrier layers (4) is arranged perpendicularly with respect to the bottom side (8) and to the side flanks (10, 12) such that it extends axially with respect to the sealing tape roll (1).

3. Sealing tape roll (1) according to Claim 1, **characterized in that**, in an unwound state of the sealing tape (2), the plurality of barrier layers (4) is arranged obliquely with respect to the top side (6) and to the bottom side (8) and perpendicularly with respect to the side flanks (10, 12).

4. Sealing tape roll (1) according to Claim 1, **characterized in that**, in an unwound state of the sealing tape (2), the plurality of barrier layers (4) is arranged perpendicularly with respect to the bottom side (8) and obliquely with respect to the side flanks (10, 12).

5. Sealing tape roll (1) according to Claim 1, **characterized in that**, in an unwound state of the sealing tape (2), the plurality of barrier layers (4) is arranged obliquely with respect to the top side (6), to the bottom side (8) and to the side flanks (10, 12).

6. Sealing tape roll (1) according to one of the preceding claims, **characterized in that** the plurality of barrier layers (4) extends continuously from the top side (6) to the bottom side (8) of the sealing tape (2).

7. Sealing tape roll (1) according to one of Claims 1 to 5, **characterized in that** the plurality of barrier layers (4) extends only partially between the top side (6) and the bottom side (8) of the sealing tape (2) .

8. Sealing tape roll (1) according to one of the preceding claims, **characterized in that** at least one barrier layer (4) of the plurality of barrier layers (4) has two barrier layer portions (44, 46), wherein in each case one barrier layer portion (44, 46) lies flat against one of the sealing tape portions (20) adjoining the barrier layer (4).

9. Sealing tape roll (1) according to Claim 8, **characterized in that** the two barrier layer portions (44, 46) are adhesively bonded to one another.

10. Sealing tape roll (1) according to Claim 8 or 9, **characterized in that** the two barrier layer portions (44, 46) form in each case a limb of the at least one barrier layer (4) and the two limbs are connected to one another by a connecting portion (48) of the at least one barrier layer (4).

11. Sealing tape roll (1) according to Claim 10, **characterized in that** the connecting portion (48) of the at least one barrier layer (4) is of a U-shaped or V-shaped form and is arranged in the region of the top side (6) or the bottom side (8) of the sealing tape (2).

12. Sealing tape roll (1) according to Claim 10 or 11, **characterized in that** at least two barrier layers (4) of the plurality of barrier layers (4) have in each case two barrier layer portions (44, 46) and a connecting portion (48), and the connecting portions (48), following one after the other in the longitudinal direction (L) of the sealing tape (2), of the at least two barrier layers (4) are arranged in an alternating manner in the region of the top side (6) and the bottom side (8) of the sealing tape (2) .

13. Sealing tape roll (1) according to Claim 12, **characterized in that** at least one barrier layer (4), which has only one barrier layer portion extending preferably continuously from the top side (6) to the bottom side (8) of the sealing tape (2), is arranged between the at least two barrier layers (4) which have two barrier layer portions (44, 46) and a connecting portion (48).

14. Sealing tape roll (1) according to one of the preceding claims, **characterized in that**, in an unwound state of the sealing tape (2), the barrier layers (4) are arranged parallel to one another.

15. Sealing tape roll (1) according to one of the preceding claims, **characterized in that** the plurality of barrier layers (4) is formed from a film-like material or an adhesive, in particular from a film strip, an adhesive tape strip or an adhesive-like liquid medium.

16. Sealing tape roll (1) according to one of the preceding claims, **characterized in that** the bottom side (8) of the sealing tape (2) has an adhesive layer (15) for connecting the sealing tape (2) to a frame element (54).

17. Sealing tape roll according to one of the preceding claims, **characterized in that** the plurality of barrier layers (4) runs continuously from one end face (16) of the sealing tape roll (1) to the opposite end face (18) of the sealing tape roll (1).

## Revendications

1. Rouleau de bande d'étanchéité (1) composé d'une bande d'étanchéité (2) composée d'une mousse souple compressible avec une multitude de couches formant barrière (4) située à l'intérieur,
dans lequel la bande d'étanchéité (2) présente une face supérieure (6), une face inférieure (8) et deux flancs latéraux (10, 12) reliant la face supérieure (6) et la face inférieure (8), ainsi qu'un sens longitudinal (L), qui est orienté de manière parallèle par rapport à la face inférieure (8) et par rapport aux flancs latéraux (10, 12), dans lequel la bande d'étanchéité (2) est enroulée autour d'un axe (14), qui s'étend de manière transversale par rapport au sens longitudinal (L) de la bande d'étanchéité (2), pour former le rouleau de bande d'étanchéité (1) de telle manière que la face supérieure (6) d'une spire jouxte la face inférieure (8) d'une spire adjacente du rouleau de bande d'étanchéité (1) et les flancs latéraux (10, 12) de la bande d'étanchéité (2) forment des surfaces frontales (16, 18) du rouleau de bande d'étanchéité (1), dans lequel une largeur du rouleau de bande d'étanchéité (1) est définie en tant que la distance d'une surface frontale (16) par rapport à la surface frontale faisant face (18) du rouleau de bande d'étanchéité (1),
**caractérisé en ce que** la bande d'étanchéité (2) présente une multitude de sections de bande d'étanchéité (20), qui sont disposées les unes derrière les autres dans le sens longitudinal (L) dans un état déroulé de la bande d'étanchéité (2), dans lequel une couche formant barrière (4) de la multitude de couches formant barrière (4) est disposée entre respectivement deux sections de bande d'étanchéité (20) se jouxtant l'une l'autre de la multitude de sections de bande d'étanchéité (20) et
la multitude de couches formant barrière (4) s'étend sur au moins 50 % de la largeur du rouleau de bande d'étanchéité (1) entre les surfaces frontales (16, 18) se faisant face les unes les autres du rouleau de bande d'étanchéité (1).

2. Rouleau de bande d'étanchéité (1) selon la revendication 1, **caractérisé en ce que** la multitude de couches formant barrière (4) est disposée de manière perpendiculaire par rapport à la face inférieure (8) et par rapport aux flancs latéraux (10, 12) de sorte qu'elle s'étend de manière axiale par rapport au rouleau de bande d'étanchéité (1).

3. Rouleau de bande d'étanchéité (1) selon la revendication 1, **caractérisé en ce que** la multitude de couches formant barrière (4) est disposée, dans un état déroulé de la bande d'étanchéité (2), de manière oblique par rapport à la face supérieure (6) et par rapport à la face inférieure (8) ainsi que de manière perpendiculaire par rapport aux flancs latéraux (10, 12).

4. Rouleau de bande d'étanchéité (1) selon la revendication 1, **caractérisé en ce que** la multitude de couches formant barrière (4) est disposée dans un état déroulé de bande d'étanchéité (2) de manière perpendiculaire par rapport à la face inférieure (8) ainsi que de manière oblique par rapport aux flancs latéraux (10, 12) .

5. Rouleau de bande d'étanchéité (1) selon la revendication 1, **caractérisé en ce que** la multitude de couches formant barrière (4) est disposée dans un état déroulé de la bande d'étanchéité (2) de manière oblique par rapport à la face supérieure (6), par rapport à la face inférieure (8) et par rapport aux flancs latéraux (10, 12) .

6. Rouleau de bande d'étanchéité (1) selon l'une quelconque des revendications précédentes, **caractérisé en ce que** la multitude de couches formant barrière (4) s'étend en continu depuis la face supérieure (6) vers la face inférieure (8) de la bande d'étanchéité (2).

7. Rouleau de bande d'étanchéité (1) selon l'une quelconque des revendications 1 à 5, **caractérisé en ce que** la multitude de couches formant barrière (4) s'étend seulement en partie entre la face supérieure (6) et la face inférieure (8) de la bande d'étanchéité (2).

8. Rouleau de bande d'étanchéité (1) selon l'une quelconque des revendications précédentes, **caractérisé en ce qu'**au moins une couche formant barrière (4) de la multitude de couches formant barrière (4) présente deux sections de couche formant barrière (44, 46), dans lequel respectivement une section de couche formant barrière (44, 46) repose à plat au niveau d'une des sections de bande d'étanchéité (20) jouxtant la couche formant barrière (4).

9. Rouleau de bande d'étanchéité (1) selon la revendication 8, **caractérisé en ce que** les deux sections de couche formant barrière (44, 46) adhèrent l'une à l'autre.

10. Rouleau de bande d'étanchéité (1) selon la revendication 8 ou 9, **caractérisé en ce que** les deux sections de couche formant barrière (44, 46) forment respectivement une branche de l'au moins une couche formant barrière (4) et les deux branches sont reliées l'une à l'autre par une section de liaison (48) de l'au moins une couche formant barrière (4).

11. Rouleau de bande d'étanchéité (1) selon la revendication 10, **caractérisé en ce que** la section de liaison (48) de l'au moins une couche formant barrière (4) est réalisée en forme de U ou de V et est disposée dans la zone de la face supérieure (6) ou de la face inférieure (8) de la bande d'étanchéité (2).

12. Rouleau de bande d'étanchéité (1) selon la revendication 10 ou 11, **caractérisé en ce qu'**au moins deux couches formant barrière (4) de la multitude de couches formant barrière (4) présentent respectivement deux sections de couche formant barrière (44, 46) et une section de liaison (48), et les sections de liaison (48), se suivant les unes les autres dans le sens longitudinal (L) de la bande d'étanchéité (2), des au moins deux couches formant barrière (4) sont disposées en alternance dans la zone de la face supérieure (6) et de la face inférieure (8) de la bande d'étanchéité (2).

13. Rouleau de bande d'étanchéité (1) selon la revendication 12, **caractérisé en ce qu'**est disposée entre les au moins deux couches formant barrière (4) qui présentent deux sections de couche formant barrière (44, 46) et une section de liaison (48), au moins une couche formant barrière (4) qui présente seulement une section de couche formant barrière, qui s'étend de préférence en continu depuis la face supérieure (6) vers la face inférieure (8) de la bande d'étanchéité (2).

14. Rouleau de bande d'étanchéité (1) selon l'une quelconque des revendications précédentes, **caractérisé en ce que** les couches formant barrière (4) sont disposées de manière parallèle les unes par rapport aux autres dans un état déroulé de la bande d'étanchéité (2).

15. Rouleau de bande d'étanchéité (1) selon l'une quelconque des revendications précédentes, **caractérisé en ce que** la multitude de couches formant barrière (4) est formée à partir d'un matériau de type film ou d'une colle, en particulier à partir d'un ruban de film, d'un ruban de bande adhésive ou d'un milieu liquide de type colle.

16. Rouleau de bande d'étanchéité (1) selon l'une quelconque des revendications précédentes, **caractérisé en ce que** la face inférieure (8) de la bande d'étanchéité (2) présente une couche de colle (15) servant à relier la bande d'étanchéité (2) à un élément de cadre (54).

17. Rouleau de bande d'étanchéité selon l'une quelconque des revendications précédentes, **caractérisé en ce que** la multitude de couches formant barrière (4) s'étend en continu depuis une surface frontale (16) du rouleau de bande d'étanchéité (1) vers la surface frontale faisant face (18) du rouleau de bande d'étanchéité (1).
